# EUROPÄISCHE PATENTSCHRIFT

(11) **EP 3 590 808 B1**
(45) Veröffentlichungstag und Bekanntmachung des Hinweises auf die Patenterteilung: **13.10.2021**
(21) Anmeldenummer: 19184340.8
(22) Anmeldetag: 04.07.2019
(51) Int. Cl.: B62K 19/40, B62K 25/02, B62J 7/04, B62J 6/04, B62J 6/20, B62J 6/055, B62J 11/19, B62J 7/08, B62K 19/34, B62M 6/55, B62M 6/90, B62J 43/13, B62J 43/28

(54) **VERFAHREN ZUM BEFESTIGEN EINES GEPÄCKTRÄGERS AN EINEM FAHRRAD, FAHRRAD SOWIE FAHRRADRAHMEN UND LICHTELEMENT FÜR EIN SOLCHES FAHRRAD**
METHOD FOR FIXING A LUGGAGE CARRIER TO A BICYCLE, BICYCLE AS WELL AS BICYCLE FRAME AND LIGHTING ELEMENT FOR SUCH A BICYCLE
PROCÉDÉ DE FIXATION D'UN PORTE-BAGAGES SUR UNE BICYCLETTE, BICYCLETTE AINSI QUE CADRE DE BICYCLETTE ET ÉLÉMENT D'ÉCLAIRAGE POUR UNE TELLE BICYCLETTE

(30) Priorität: 05.07.2018 EP 18181933; 06.07.2018 EP 18182236
(43) Veröffentlichungstag der Anmeldung: 08.01.2020
(73) Patentinhaber: Winora-Staiger GmbH, 97526 Sennfeld (DE)
(72) Erfinder: Beutner, Ingo, 97737 Gemünden (DE)
(74) Vertreter: V.O.

(56) Entgegenhaltungen:
- WO-A1-2010/151115
- WO-A1-2011/000398
- DE-U1-202009 011 771
- DE-U1-202017 104 339
- NL-C2- 2 001 779
- US-A1- 2006 196 322
- US-A1- 2017 313 376

## Beschreibung

Vorliegende Erfindung betrifft ein Verfahren zum Befestigen eines Gepäckträgers an einem Fahrrad, ein Fahrrad sowie ein Lichtelement und einen Fahrradrahmen für ein solches Fahrrad und insbesondere ein Fahrrad mit batteriebetriebenem Hilfsantrieb, wobei Haltemittel zur Befestigung eines Lichtelementes und eines Gepäckträgers oder weiterer Anbauteile vorgesehen sind.

Derartige Fahrräder und Fahrradrahmen sind aus dem Stand der Technik bekannt.

Die DE 20 2009 011771 U1 beschreibt eine Befestigungsvorrichtung zur Befestigung von Anbauteilen an einem Fahrrad, mit zwei formschlüssig miteinander verbindbaren Befestigungselementen, wobei das zweite Befestigungselement einen Befestigungsvorsprung aufweist, der im verbundenen Zustand der beiden Befestigungselemente in eine Befestigungsöffnung hineinragt.

Die NL 2 001 779 C2 beschreibt ein Rahmenrohr eines Gepäckträgers, in den ein Beleuchtungselement eingeschoben werden kann, wobei es aus diesem Rohr vorsteht.

Die WO 2011/0000398 A1 beschreibt einen Aufnahmeschuh an einem Fahrradrahmen, an dem ein Beleuchtungselement befestigt und insbesondere verrastet werden kann.

Die gattungsgemäße DE 20 2017 104339 U1 beschreibt ein Ausfallende, das eine Aufnahme aufweist, in die ein Verbindungselement für einen Gepäckträger befestigt werden kann. Mittels dieses Verbindungselementes kann auch eine Fahrradlampe am Rahmen befestigt werden.

Die US 2006/196322 zeigt eine Aufnahme an einem Fahrradrahmen, in die ein Rahmenrohr eines Gepäckträger eingeschoben werden kann.

Die WO 2010/151115 A1 beschreibt einen Fahrradrahmen aus einer Rohrkonstruktion zur Bereitstellung von Befestigungsmöglichkeiten für zusätzliche Komponenten, wie z.B. einem Lenkbolzen, einem Sattel und Befestigungsmöglichkeiten für ein Hinterrad, wobei die Rohrkonstruktion ein Zubehörrohr umfasst, über dessen Endabschnitt ein Zubehörteile aufgenommen werden kann, um das Fahrrad mit zusätzlicher Funktionalität auszustatten.

Ähnliches beschreibt die US 2017/313376 A1, nämlich ebenfalls einen Fahrradrahmen, umfassend ein Sattelrohr, ein Unterrohr und ein Oberrohr, wobei einige der Rohre an Endabschnitten Öffnungen aufweisen, in die Zubehörteile eingesetzt werden können.

Sind Beleuchtungen für ein Fahrrad, und insbesondere ein Fahrrad mit elektrischem Hilfsantrieb, also ein E-Bike, gesetzlich notwendig, so dienen Gepäckträger der wahlweisen Befestigung von Gepäckmitteln, Kindersitzen oder dergleichen Elementen. Neben Gepäckträgern werden an Fahrrädern aber auch weitere Anbauteile, wie beispielsweise Schutzbleche, Getränkehalter, Sensoren, Fahrradbetriebsmittel, Nummernschilder oder dergleichen befestigt. Für all diese Bauteile ist es bekannt, an Fahrrädern geeignete Haltemittel vorzusehen, um eine sichere Befestigung zu gewährleisten. Problematisch ist hier jedoch, dass meist eine Vielzahl unterschiedlicher Befestigungsmittel zur Verfügung gestellt wird, die vor allem bei der Demontage der Bauteile, wenn sie also nicht benötigt werden, am Rahmen verbleiben. Insbesondere aus designtechnischer Sicht ist dies oft nicht gewollt. Auch ist die Umrüstung von Fahrrädern mit Beleuchtungen und ohne Beleuchtungen sowie mit Gepäckträgern und ohne Gepäckträger bzw. weiteren Anbauteilen oft problematisch, da die einzelnen Teile meist mit unterschiedlichen Haltemittel versehen und so nicht an unterschiedlichen Stellen positioniert oder gar überhaupt nicht befestigt werden können. Dies ist insbesondere bei Gepäckträgern der Fall. Hier kommt es häufig zum Problem bei der Befestigung von Lichtelementen.

Die Aufgabe der vorliegenden Erfindung ist es folglich, ein Fahrrad anzubieten, das eine einfachere und sichere Montage von Lichtelementen und einem Gepäckträger oder weiteren Anbauteilen erlaubt.

Diese Aufgabe wird durch ein Fahrrad nach dem unabhängigen Anspruch 1, einen Fahrradrahmen nach dem unabhängigen Anspruch 12, ein Lichtelement nach dem unabhängigen Anspruch 13 und ein Verfahren zum Befestigen eines Gepäckträgers an einem Fahrrad nach dem unabhängigen Anspruch 14 gelöst.

Die Erfindung ist im beigefügten Anspruchssatz beschrieben.

Nach Anspruch 1 wird diese Aufgabe gelöst durch ein Fahrrad, umfassend einen Fahrradrahmen, wobei am Fahrradrahmen wenigstens eine Aussparung vorgesehen ist, die derart ausgebildet ist, dass darin ein Lichtelement befestigbar ist und, anstelle des Lichtelements, ein Aufnahmeschuh einsetzbar und befestigbar ist, wobei der Aufnahmeschuh mit einem Gepäckträger oder weiteren Anbauteilen verbunden ist oder daran befestigbar ist, wobei die Aussparung an einem Ausfallende des Fahrradrahmens angeordnet ist, und das Lichtelement in die Aussparung einsetzbar ist und im eingesetzten Zustand oberflächenbündig im Fahrradrahmen am Ausfallende aufgenommen ist.

Nach Anspruch 12 wird diese Aufgabe gelöst durch einen Fahrradrahmen für ein Fahrrad, wie es hierin beschrieben ist, wobei am Fahrradrahmen wenigstens eine Aussparung vorgesehen ist, die derart ausgebildet ist, dass darin ein Lichtelement befestigbar ist und, anstelle des Lichtelements, ein Aufnahmeschuh einsetzbar und befestigbar ist, wobei der Aufnahmeschuh mit einem Gepäckträger oder weiteren Anbauteilen verbunden ist oder daran befestigbar ist, wobei die Aussparung an einem Ausfallende des Fahrradrahmens angeordnet ist, und das Lichtelement in die Aussparung einsetzbar ist und im eingesetzten Zustand oberflächenbündig im Fahrradrahmen am Ausfallende aufgenommen ist.

Nach Anspruch 13 wird die Aufgabe gelöst durch ein Lichtelement für ein Fahrrad, wie es hier beschrieben ist, das derart ausgebildet ist, dass es in die Aussparung am Ausfallende des Fahrradrahmens einsetzbar und befestigbar ist, wobei das Lichtelement im eingesetzten Zustand oberflächenbündig im Fahrradrahmen am Ausfallende aufgenommen ist.

Kern der Erfindung ist die Ausbildung einer Aussparung an einem Ausfallende des Fahrradrahmens. Das Ausfallende ist optional als das Bauteil eines Fahrradrahmens ausgebildet, an dem eine Kettenstrebe und eine Sitzstrebe zusammenlaufen und an dem eine Radaufnahme zur Aufnahme wenigstens eines Rades, und insbesondere eines Hinterrades, vorgesehen ist.

In dieser Aussparung, die optional integral im Fahrradrahmen ausgebildet und als Aufnahme ausgebildet ist, kann ein Lichtelement eingesetzt und befestigt werden. Das Lichtelement ist im eingesetzten Zustand oberflächenbündig im Fahrradrahmen am Ausfallende aufgenommen. Anstelle des Lichtelements kann weiter ein Aufnahmeschuh in die Aussparung eingesetzt und befestigt werden, wobei der Aufnahmeschuh mit einem Gepäckträger oder weiteren Anbauteilen verbunden ist oder daran befestigbar ist. Auch hier ist der Aufnahmeschuh optional formschlüssig in der Aussparung aufnehmbar, und insbesondere oberflächenbündig in die Aussparung einsetzbar. Oberflächenbündig bedeutet hier, dass ein im Wesentlichen kantenfreier Übergang zwischen Fahrradrahmen und Aufnahmeschuh bzw. Lichtelement gewährleistet ist. Dies schützt die Einbauteile, da sie geringeren mechanischen äußeren Belastungen unterworfen sind.

Das erfindungsgemäße Fahrrad bzw. der erfindungsgemäße Fahrradrahmen erlauben auf diese Art und Weise den wahlweisen Aufbau des Fahrrades mit und ohne Beleuchtungselement sowie mit und ohne Gepäckträger. Erfindungsgemäß ist es vorgesehen, dass anstelle des Lichtelementes in dieselbe Aussparung der Aufnahmeschuh zur Befestigung des Gepäckträgers bzw. der weiteren Anbauteile am Fahrrad aufgenommen werden kann.

Optional ist die Aussparung integral im Ausfallende vorgesehen. Das heißt, es handelt sich um eine einstückig im Ausfallende ausgebildete Aussparung. Optional ist das Ausfallende mit der Aussparung als Fräsbauteil oder Gussbauteil ausgebildet. Optional ist der Aufnahmeschuh formschlüssig in der Aussparung aufnehmbar ausgebildet, optional sodass allein schon durch einen resultierenden Formschluss eine stabile Lagerung des Aufnahmeschuhs in der Aussparung gewährleistet ist. Selbiges gilt optional für das Lichtelement.

Optional weist die Aussparung wenigstens eine Lagerfläche derart auf, dass über den Gepäckträger eingeleitete Normallasten als Normalkräfte in den Fahrradrahmen abgeleitet werden. Hier ist optional eine Presspassung zwischen aneinandergekoppelten Bauteilen der Aussparung und des Lichtelementes bzw. Aufnahmeschuss vorgesehen. Beispielsweise kann zwischen dem Aufnahmeschuh und der Aussparung bzw. dem Lichtelement und der Aussparung eine Presspassung derart eingestellt werden, dass ein Hauptteil der einwirkenden Lasten über Normalkraftpressung abgeleitet wird.

Optional ist die Aussparung derart ausgebildet, dass der Aufnahmeschuh und/oder das Lichtelement in einer Presspassung in der Aussparung einsetzbar und so temporär gehalten sind. In einem weiteren Schritt kann dann optional eine Fixierung, beispielsweise mittels gesonderter Befestigungsmittel, wie sie im Folgenden noch im Detail beschrieben werden, erfolgen. Auf diese Weise ist auch eine Vorpositionierung der am Fahrrad bzw. Fahrradrahmen zu befestigenden Bauteile möglich.

Optional ist der Aufnahmeschuh mit einem Montagemittel insbesondere lösbar am Gepäckträger befestigbar. Auf diese Weise kann der Aufnahmeschuh als Standardbauteil für ein Fahrrad bzw. einen Rahmen konfektioniert und dann an unterschiedlichen Gepäckträgern befestigt werden. Auch ist es denkbar, einen Aufnahmeadapter zur Verfügung zu stellen, über den der Gepäckträger mit einem anderen Fahrrad bzw. Fahrradrahmen verbunden werden kann. So sind zum Beispiel aus dem Stand der Technik Fahrradrahmen bekannt, die insbesondere am Ausfallende mit entsprechenden Schraubenaufnahmen versehen sind, an denen ein Gepäckträger angeschraubt werden kann. Erfindungsgemäß ist es möglich, ein Adapterelement zur Verfügung zu stellen, das daran befestigt werden kann und das seinerseits dann an dem Gepäckträger, wie er hier beschrieben ist, befestigbar ist. Auf diese Weise kann der erfindungsgemäße Gepäckträger sowohl mit dem erfindungsgemäßen Fahrrad bzw. Fahrradrahmen als auch mit einem traditionellen oder jedem anderen Fahrradrahmen verwendet werden. Der Gepäckträger weist insbesondere dazu optional ein Montagestück auf, mit dem er mit dem Montageschuh und, insbesondere alternativ mit einem zuvor genannten Adapterelement verbindbar ist. Auch ist es denkbar, unterschiedliche Aufnahmeschuhe zur Verfügung zu stellen, die passend in jeweils an unterschiedlichen Fahrradrahmen konfektionierten Aussparungen einsetzbar und befestigbar sind. Auf diese Weise kann ein Gepäckträger mit unterschiedlichen Fahrradrahmen und deren speziell darauf abgestimmten Aufnahmeschuhen und natürlich auch Lichtelementen verwendet werden. Optional weist das Montagestück und der Aufnahmeschuh und/oder das Adapterelement ein Formschlusspassung auf, so dass sie optional temporär ohne weitere Befestigungsmittel, miteinander verbindbar sind. Optional kann eine Endfixierung über geeignete Befestigungsmittel, bspw. Schrauben erfolgen.

Es sei darauf hingewiesen, dass in Bezug auf die weiteren Anbauteile das gilt, was in Bezug auf den Gepäckträger hierin erwähnt ist, außer es wird explizit auf Anderes hingewiesen.

Optional ist der Aufnahmeschuh relativ zum Gepäckträger oder den weiteren Anbauteilen bewegbar, und insbesondere um eine Achse koaxial zu einer Radachse des Fahrrades verschwenkbar, am Gepäckträger bzw. den weiteren Anbauteilen angeordnet bzw. anordbar. Auf diese Weise kann die Lage des Gepäckträgers bzw. der weiteren Anbauteile relativ zum Aufnahmeschuh verändert werden und so beispielsweise eine Adaption an unterschiedliche Fahrradrahmen erfolgen. Insbesondere kann auf diese Weise eine horizontale Ausrichtung einer Gepäckträgerplattform eines Gepäckträgers erreicht werden.

Optional sind der Aufnahmeschuh und/oder das Lichtelement mittels Befestigungsmitteln an der Aussparung fixierbar, und insbesondere lösbar fixierbar. Der Aufnahmeschuh und/oder das Lichtelement können beispielsweise mittels Befestigungselementen, die am Aufnahmeschuh und/oder am Lichtelement festlegbar sind, und mit Befestigungselementaufnahmen am Ausfallende in Kraftkopplung bringbar sind oder umgekehrt, fixiert werden. Hier können beispielsweise Bolzen, Schrauben, Steckachsen, Rasten, Klemmen oder dergleichen Bauteile verwendet werden. Optional ist wenigstens ein Teil der Befestigungsmittel zum Fixieren des Lichtelementes gleich den Befestigungsmitteln, die zur Fixierung des Aufnahmeschuhs dienen. So kann beispielsweise über Schrauben, über die das Lichtelement in der Aussparung befestigt werden, optional auch der Gepäckträger befestigt wurden. Oder es kann optional über Schraubaufnahmen am Fahrradrahmen sowohl das Lichtelement als auch der Aufnahmeschuh befestigt werden. Auch ist es denkbar, Schraubendurchführungen zur Befestigung des Lichtelementes in der Aussparung so auszubilden, dass sie als Schraubendurchführungen zur Festlegung des Aufnahmeschuhs dienen können. Es sind sämtliche aus dem der Technik bekannte Befestigungsmittel anwendbar.

Optional sind am Aufnahmeschuh und/oder am Lichtelement Führungen vorgesehen, die in entsprechende Führungsaufnahmen am Ausfallende, eingreifen und so insbesondere eine Vorpositionierung des Aufnahmeschuhs bzw. des Lichtelementes in der Aussparung erlauben. Hier sind beispielsweise Nut- und Federsysteme oder dergleichen Steck- und Führungssysteme anwendbar. Auch hier gilt, dass Synergien zwischen Aufnahmeschuh, Lichtelement und Aussparungen erzielt werden sollten, um die gemeinsame Nutzung von einzelnen Mitteln untereinander zu erlauben.

Optional ist es denkbar, dass das Lichtelement derart ausgebildet ist, dass es im eingesetzten Zustand von der Fahrradrückseite und auch seitlich zum Fahrrad erkennbar ist. Für ein Vorderlicht gilt natürlich, dass das Lichtelement vorzugsweise von einer Fahrradvorderseite und auch seitlich dazu erkennbar sein sollte.

Optional weist der Aufnahmeschuh ein Lichtelement auf oder umgekehrt.

Optional ist die Aussparung, bezüglich einer Rollebene des Fahrrades betrachtet, oberhalb einer Achsaufnahme zur Aufnahme eines Hinterrades und/oder Vorderrades im Fahrradrahmen angeordnet.

Das Lichtelement ist optional als Rücklicht und/oder als Bremslicht und/oder Nummernschildbeleuchtung und/oder als Blink- oder dergleichen Licht ausgebildet. Es ist denkbar, das Lichtelement als Signalisierungslicht beim Betrieb des Fahrrades auszubilden.

Optional weist der Gepäckträger oder das weitere Anbauteil, insbesondere an seinem in Axialrichtung des Fahrrades betrachteten hinteren Ende, wenigstens eine weitere Aussparung auf, die der Aufnahme wenigstens eines weiteren Lichtelementes und/oder eines weiteren Aufnahmeschuhs dient, wobei optional die weitere Aufnahme derart ausgebildet ist, dass darin das Lichtelement und/oder der Aufnahmeschuh einsetzbar und befestigbar ist, die in die Aussparung am Fahrrahmen einsetzbar und dort befestigbar sind. Auf diese Weise kann beispielsweise ein Lichtelement aus der Aussparung am Fahrradrahmen entfernt, dort ein Aufnahmeschuh eingesetzt werden, der einen Gepäckträger oder ein weiteres Anbauteil erlaubt oder eine Befestigung daran zulässt, und in eine weitere Aufnahme, die an diesem Gepäckträger bzw. dem weiteren Anbauteil befestigt ist, das zuvor aus der Aussparung entnommene Lichtelement eingesetzt werden. Dieses Lichtelement kann dann über entsprechende Kabelführungs- und Signalleitungsmittel beleuchtet und optional einer gleichen Funktion zugeführt werden, wie es es zuvor in der Aufnahme am Fahrradrahmen hatte.

Auf diese Weise kann beispielsweise ein Lichtelement, das bspw. als Rücklicht in der Aussparung am Fahrradrahmen eingesetzt war, aus dieser Aussparung entnommen und in die weitere Aussparung am Gepäckträger eingesetzt und, wenn dieser dann am Fahrrad befestigt ist, wieder als Lichtelement und optional wieder als Rücklicht verwendet werden. Selbiges gilt für ein Lichtelement, das als Bremslicht, Blinker etc ausgebildet ist. Sämtliches gilt für einen Aufnahmeschuh, der beispielsweise als Schutzblechhalter oder Nummernschildhalter gedacht ist; auch er kann aus der Aussparung am Fahrradrahmen entfernt und nach dem Einsetzen des Gepäckträgers am Gepäckträger in die weitere Aussparung eingesetzt und befestigt werden und dort die gleiche Funktion erfüllen, wie er sie zuvor am Fahrradrahmen in der Aussparung hatte.

Optional weist der Gepäckträger Kabelführungsmittel auf, die insbesondere zwischen dem Aufnahmeschuh des Gepäckträgers bzw. der Stelle, an der der Aufnahmeschuh am Gepäckträger befestigbar ist, und der weiteren Aussparung verlaufen, wobei die Kabelführungsmittel im Bereich des Aufnahmeschuhs bzw. der Stelle, wo ein solcher befestigt werden kann, mit Kabelführungsmitteln des Fahrrades und/oder im Bereich der weiteren Aussparung mit dem Lichtelement oder einem weiteren Anbauteil elektrisch leitend verbindbar sind. Auf diese Weise kann, wie bereits zuvor erwähnt, das Lichtelement aus der Aussparung entfernt und, insbesondere nach dem Anbau des Gepäckträgers über die Kabelführungsmittel mit entsprechenden Signalgebermitteln am Fahrrad wieder verbunden werden. Hier sind sämtliche aus dem Stand der Technik bekannte Verfahren zum Anschluss des Lichtelementes bzw. weiterer Anbauteile am Aufnahmeschuh etc. anwendbar. So können entsprechende Konnektierungsmittel, wie Steckverbinder, Klemmen, Klemmleisten etc. zur Verbindung der einzelnen Kabelführungsmittel verwendet werden, wobei hier sämtliche aus dem Stand der Technik bekannte Verbinder denkbar sind. Auch ist es denkbar, in der Aussparung bzw. der weiteren Aussparung entsprechende Konnektierungsmittel vorzusehen, sodass beispielsweise beim Einsetzen des Lichtelementes bzw. des Aufnahmeschuhs in die Aussparung eine automatische Verbindung der Kabelführungsmittel mit Kabelführungsmitteln im Fahrradrahmen bzw. Gepäckträger erfolgt.

Optional ist im Bereich der Aussparung und/oder der weiteren Aussparung wenigstens ein elektrisches Signalleitungsmittel mit wenigstens einem Konnektierungsmittel vorgesehen, das mit dem Lichtelement oder einem elektrischen Anbauteil an dem Aufnahmeschuh signalleitend verbindbar ist. Auch hier gilt vorher Gesagtes.

Optional ist wenigstens ein Abdeckelement vorgesehen, zum Abdecken der Aussparung und/oder der weiteren Aussparung, wenn kein Lichtelement und/oder Aufnahmeschuh darin eingesetzt ist. Ein solches Abdeckelement kann beispielsweise auch wenigstens einen Reflektor umfassen. Selbiges gilt für das Lichtelement, an dem wenigstens ein Reflektorelement vorgesehen sein kann.

Wie bereits erwähnt, betrifft die Erfindung nicht nur ein Fahrrad, sondern auch einen Fahrradrahmen für ein solches Fahrrad und ein Lichtelement für ein solches Fahrrad.

Der erfindungsgemäße Fahrradrahmen und insbesondere das Rahmenrohr können wenigstens abschnittsweise aus einem Extrusionsprofil oder dergleichen insbesondere Strangpressprofil hergestellt sein. Es ist möglich, den Fahrradrahmen aus einem Metallwerkstoff, und insbesondere Aluminium, herzustellen. Darüber hinaus ist es denkbar, den Fahrradrahmen aus einem Kunststoffmaterial, und insbesondere aus einem Carbonmaterial oder dergleichen Faserwerkstoff, herzustellen. Hybridformen sind ebenfalls denkbar.

Die Erfindung betrifft weiter ein Verfahren zum Befestigen eines Gepäckträgers an einem Fahrrad umfassend die folgenden Schritte: Entfernen eines Lichtelementes des Fahrrades aus einer Aussparung an einem Ausfallende am Fahrradrahmen des Fahrrades, wobei das Lichtelement im eingesetzten Zustand oberflächenbündig im Fahrradrahmen am Ausfallende aufgenommen ist; Einsetzten und Befestigen eines Aufnahmeschuhs in die Aussparung am Fahrradrahmen, wobei am Aufnahmeschuh der Gepäckträger befestigt oder befestigbar ist; Einsetzten und Befestigen des entfernten Lichtelementes in eine weitere Aussparung am Gepäckträger.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Ansicht einer Ausführungsform des erfindungsgemäßen Fahrrades;
- Fig. 2: eine isometrische Darstellung einer Ausführungsform des erfindungsgemäßen Fahrradrahmens;
- Fig. 3 - 5: isometrische Darstellungen von Lichtelementen integriert in Ausfallenden des Fahrrades gemäß Fig. 1;
- Fig. 6: isometrische Detaildarstellungen der Lichtelemente gemäß Fig. 3;
- Fig. 7: eine isometrische Darstellung einer weiteren Ausführungsform eines Fahrradrahmens mit einem Gepäckträger;
- Fig. 8 - 10: isometrische Detaildarstellungen der Ausführungsform bzw. des Gepäckträgers aus Fig. 7;
- Fig. 11 und 12: isometrische Darstellungen einer weiteren Ausführungsform des Gepäckträgers und eines Befestigungsmittels für Anbauteile;
- Fig. 13 und 14: isometrische Detaildarstellungen der Ausführungsform bzw. des Befestigungsmittels aus Fig. 11;
- Fig. 15 und 16: isometrische Darstellungen einer weiteren Ausführungsform des Gepäckträgers;
- Fig. 17 und 18: Seitenansichten des Gepäckträgers gemäß Fig. 15 bzw. 16;
- Fig. 19 und 20: Rückansichten des Gepäckträgers gemäß Fig. 15 bzw. 16;
- Fig. 21 und 22: Detailansichten des Gepäckträgers gemäß Fig. 15 bzw. 16; und
- Fig. 23 und 24: isometrische Darstellungen einer weiteren Ausführungsform des Gepäckträgers.

Im Folgenden werden für gleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert.

Die Erfindung wird hier anhand der beiliegenden Zeichnungen beschrieben, in denen Ausführungsformen der Erfindung gezeigt sind. Diese Ausführungsformen sind hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

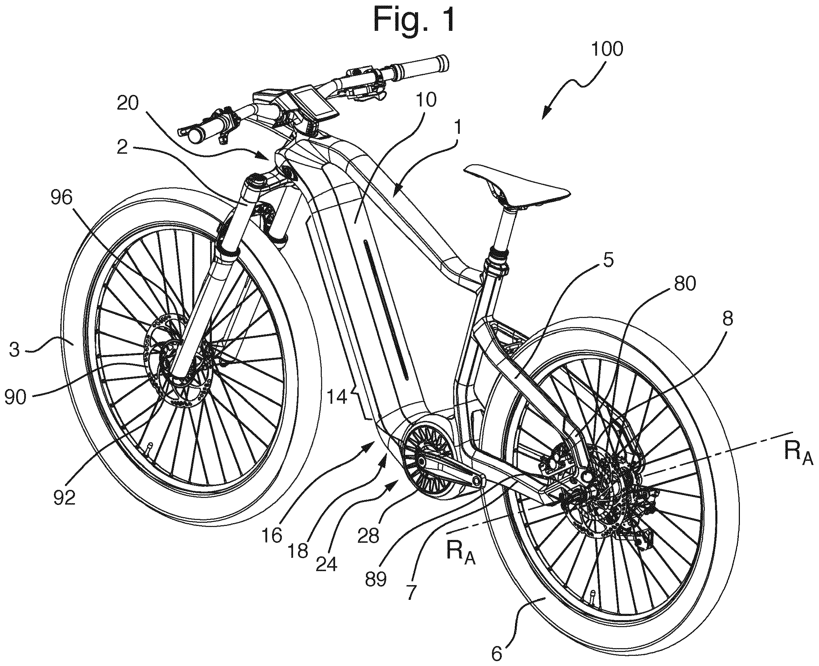

Fig. 1 zeigt eine isometrische Darstellung einer Ausführungsform des erfindungsgemäßen Fahrrades 100, umfassend eine Ausführungsform des erfindungsgemäßen Fahrradrahmens 1. Am Fahrradrahmen 1 ist in einem Lenkkopfbereich 20 eine Vordergabel 2 angeordnet, die ein Vorderrad 3 trägt. An diesem Vorderrad 3 ist eine Bremsscheibe 90 umfassend einen Messring 92 angeordnet und Teil eines inkrementellen Messwegesystems ist. Weiter ist am Fahrradrahmen 1 ein Hinterrad 6 angeordnet, das an einem Ausfallende 8 positioniert ist. Das Ausfallende 8 ist Teil des Fahrradrahmens 1, wobei es optional an Sitzstreben 5 und Kettenstreben 7 angeschlossen ist. Optional ist es möglich, obigen Messring 92 bzw. das inkrementelle Messwegesystem auch oder alternativ am Hinterrad bzw.

Rahmenkomponenten in diesem Bereich zu positionieren. Am Ausfallende 8 des Fahrradrahmens, und insbesondere im Bereich angrenzend an die Sitzstreben 5 sind Lichtelemente 80 integriert, die im Detail im Folgenden noch weiter erläutert werden.

Der Fahrradrahmen 1 umfasst einen Antriebslagerbereich 24, an dem ein Antriebslagergehäuse 26 zur Aufnahme eines insbesondere batteriebetriebenen Hilfsmotors 28 ausgebildet ist. Der Hilfsmotor 28 kann beispielsweise ein Elektromotor und insbesondere ein Elektromotor mit Kurbelantrieb sein. Die entsprechende Kurbel ist hier nicht dargestellt.

Hinsichtlich der hier dargestellten Ausführungsformen gilt das im vorhergehenden allgemeinen Teil beschriebene identisch; es ist in Gänze auf die dargestellten Ausführungsformen anwendbar.

Der Fahrradrahmen 1 umfasst darüber hinaus optional ein Rahmenrohr 10, das zwischen dem Lenkkopfbereich 20 und dem Antriebslagerbereich 24 verläuft. In dieser Ausführungsform kann das Rahmenrohr 10 als Unterrohr bezeichnet werden. Es verläuft optional in geneigter Ausführung von einem in Bezug auf die Fahrradlängsebene vorne oben angeordnetem Lenkkopfbereich 20 und einem im Wesentlichen mittig unten angeordneten Motorlagerbereich.

Optional ist das Rahmenrohr 10 derart ausgebildet, dass in seinem Innenraum und einem dort axial verlaufenden Batterieaufnahmeabschnitt 14 eine Batterie 104, insbesondere für den Hilfsantrieb 28, eingeschoben werden kann.

Dabei ist der Batterieaufnahmeabschnitt 14 mit einer stirnseitig 16 verlaufenden Einschuböffnung 18 ausgestattet, über die die Batterie 104 mit ihrer Stirnseite voraus in den Batterieaufnahmeabschnitt 14 einschiebbar ist.

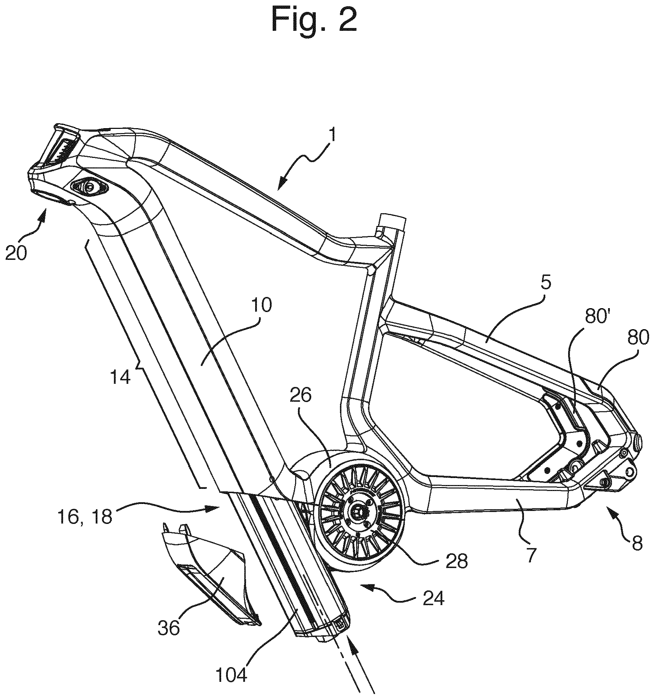

Wie insbesondere in Fig. 2 dargestellt, ist wahlweise seitlich am Rahmenrohr 10 und im Speziellen außerhalb einer axialen Verlängerung des Lichtraumprofils des Batterieaufnahmeabschnitts 14 am Rahmenrohr 10 der Antriebslagerbereich 24 ausgebildet, insbesondere umfassend ein Antriebslagergehäuse 26, zur Aufnahme des Hilfsantriebs 28. Die Anordnung ist wahlweise derart gewählt, dass die Batterie 104 seitlich an einem im Antriebslagergehäuse 26 gelagerten Hilfsantrieb 28 vorbei in den Batterieaufnahmeabschnitt 14 einschiebbar ist. Selbiges gilt für ein im Lichtraumprofil ausgebildetes Antriebslagergehäuse; auch dies ist wahlweise so ausbildet und/oder angeordnet, dass eine Batterie daran vorbei in den Batterieaufnahmeabschnitt 14 eingeschoben werden kann. Das Lichtraumprofil ist hier, wie aus dem Stand der Technik bekannt, insbesondere der im Querschnitt eingeschlossene Luftraum, den die Batterie benötigt, um in den Batterieaufnahmeabschnitt eingeschoben zu werden. Insbesondere ist ein Lichtraumprofil im Umfang der Erfindung die definierte Umgrenzungslinie der senkrechten Querebene des Einschubweges der Batterie in den Batterieaufnahmeabschnitt.

Bei dieser Ausführungsform kann das Antriebslagergehäuse 26 umfangsseitig am Rahmenrohr 10 angeschlossen sein, und zwar derart, dass die Batterie seitlich daran bzw. an einem im Antriebslagergehäuse gelagerten Hilfsantrieb 28 vorbei in den Innenraum einschiebbar ist.

Wie insbesondere in Fig. 1 und 2 dargestellt, kann ein Abdeckelement 36 vorgesehen sein, dass die Einschuböffnung 18 überdeckend lösbar am Rahmenrohr 10 und/oder am Antriebslagergehäuse 26 anordbar ist. Dieses Abdeckelement 36 kann insbesondere als Rammschutzelement fungieren.

Wie in Fig. 1 dargestellt, umfasst der Fahrradrahmen 1 wenigstens ein im Ausfallende 8 integriertes Lichtelement 80 und weiter optional ein inkrementelles Messwegesystem, mit wenigstens einem, hier beispielsweise am Vorderrad 3 angeordneten Messring 92 als Teil des inkrementellen Wegemesssystems, beispielsweise für eine Tachometereinheit. Es ist denkbar dieses Messwegesystem und insbesondere den Messring auch oder alternativ im Bereich des Hinterrades anzuordnen.

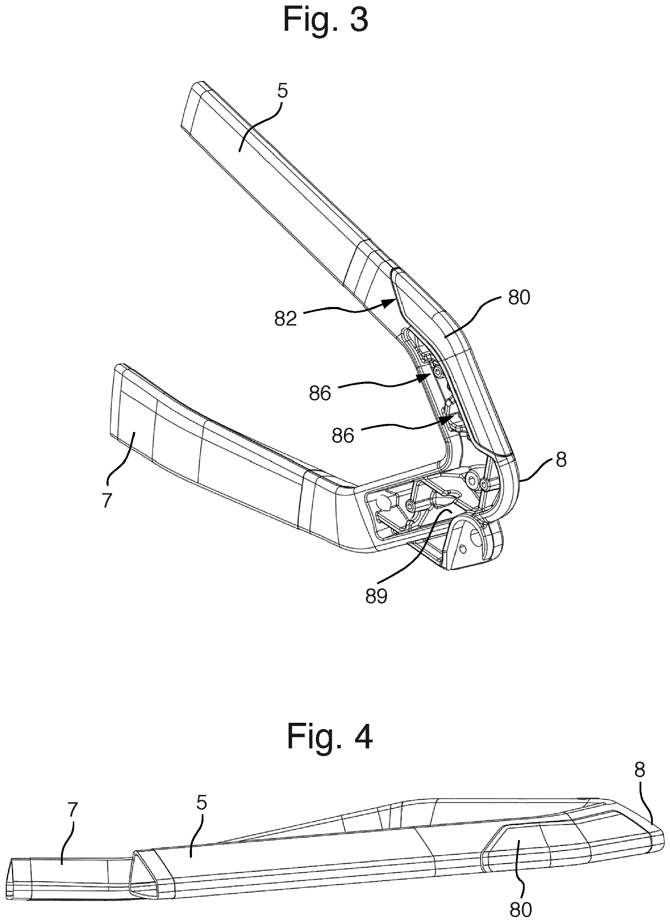

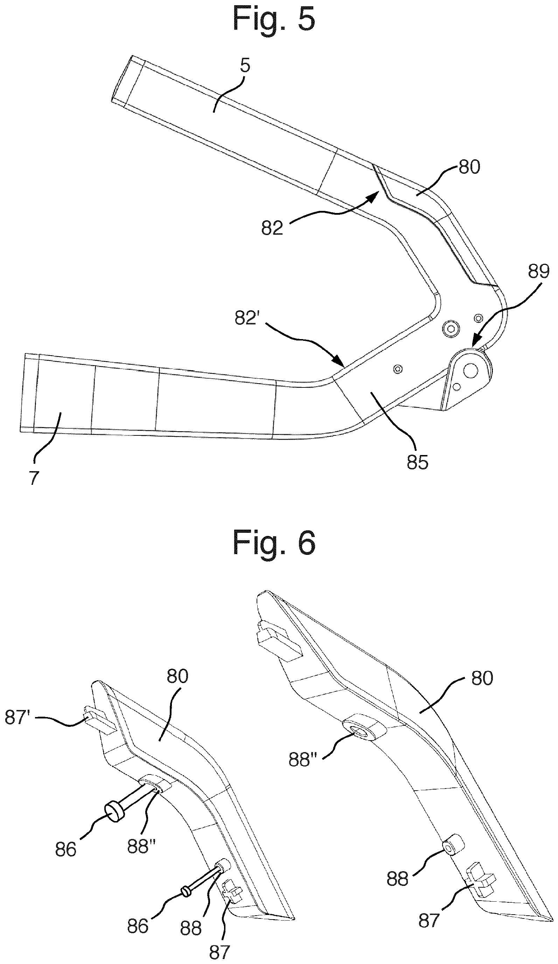

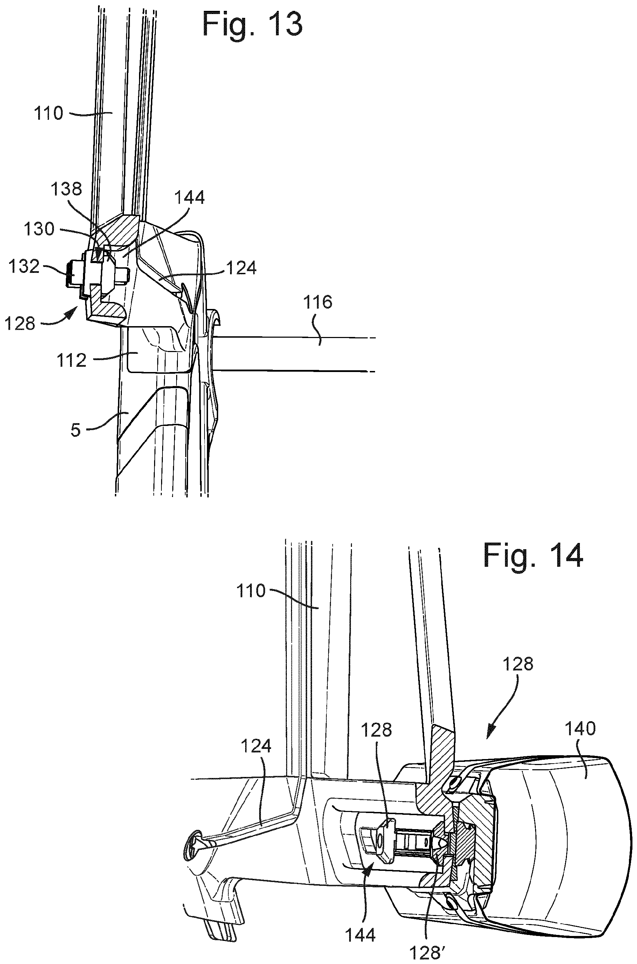

Die Figuren 3 bis 6 zeigen im Detail wenigstens ein in Fig. 1 dargestelltes, im Ausfallende 8 integriertes Lichtelement 80. Es sei erwähnt, dass ein solches Lichtelement 80 nicht nur in Verbindung mit dem hier dargestellten Fahrradrahmen 1, sondern mit jeder Art von Fahrradrahmen ihre Anwendung finden kann. Das Lichtelement 80 ist oberflächenbündig in das Ausfallende 8 integriert. Dazu weist das Ausfallende 8 eine Aussparung 82 auf, in die das Lichtelement 80 eingesetzt und mittels Befestigungselementen 86 fixiert werden kann. Der Zugang zum Montagebereich kann optional durch ein Abdeckelement 85 abgedeckt werden, wie dies in Fig. 5 dargestellt ist Die Befestigungselemente 86 greifen vorzugsweise in Befestigungselementaufnahmen 88 ein (siehe Fig. 14, exemplarisch darstellend eine linksseitige und eine rechtsseitige Ausführungsform des Lichtelementes 80 zum Einsetzten in ein linksseitiges und ein rechtsseitiges Ausfallende 8, wobei die Befestigungselemente beispielhaft in Form von Schrauben an einem Lichtelement schematisch dargestellt sind). Die Befestigungselemente können optional Bolzen oder dergleichen Schraub- oder lösbare Fixiermittel sein. Weiter vorgesehen sind Führungen 87, die in entsprechende Führungsaufnahmen 891 am Fahrradrahmen und insbesondere am Ausfallende 8 eingreifen und so insbesondere eine Vorpositionierung des Lichtelements 80 in der Aussparung 82 erlauben.

Das Lichtelement 80 ist vorzugsweise derart ausgebildet, dass es von der Fahrradrückseite, aber auch seitlich zum Fahrrad erkennbar ist. Vorzugsweise ist es oberhalb der Achsaufnahme 89 zur Aufnahme des Hinterrades 6 angeordnet. Optional sind linksseitige und rechtsseitige Lichtelemente eines Fahrradrahmens identisch ausgebildet.

Das Lichtelement 80 kann beispielsweise als Rücklicht, als Bremslicht, aber auch als Blink- oder dergleichen Licht ausgeführt werden, um eine Signalisierung beim Betrieb des Fahrrades zu erlauben.

Insbesondere in Verbindung mit einem batteriebetriebenen Fahrrad 100, wie es in Fig. 1 dargestellt ist, hat ein solches in das Ausfallende 8 eingebundene Lichtelement 80 eine vorteilhafte Funktion.

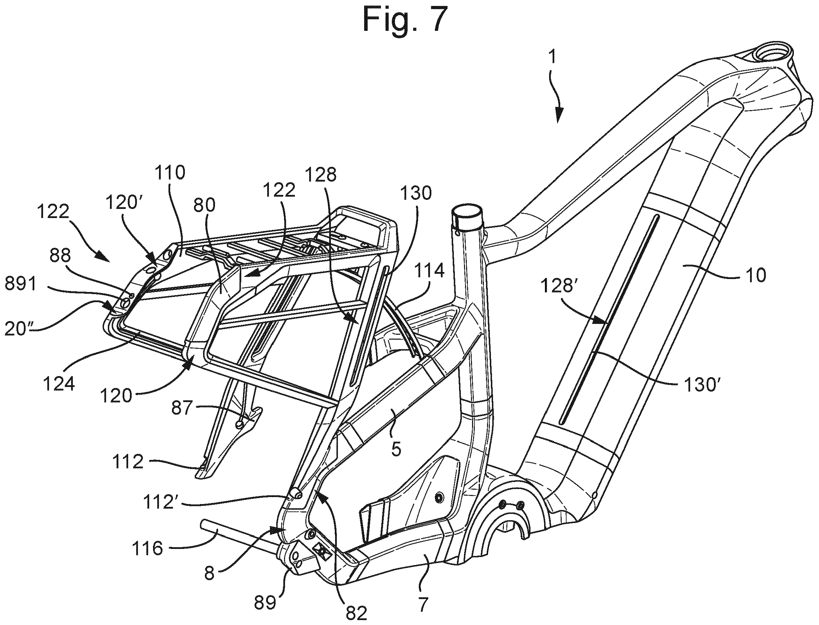

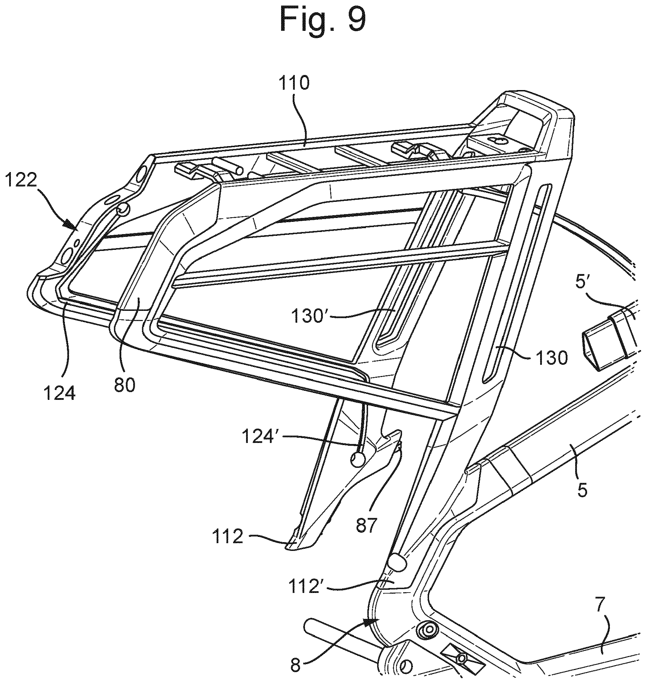

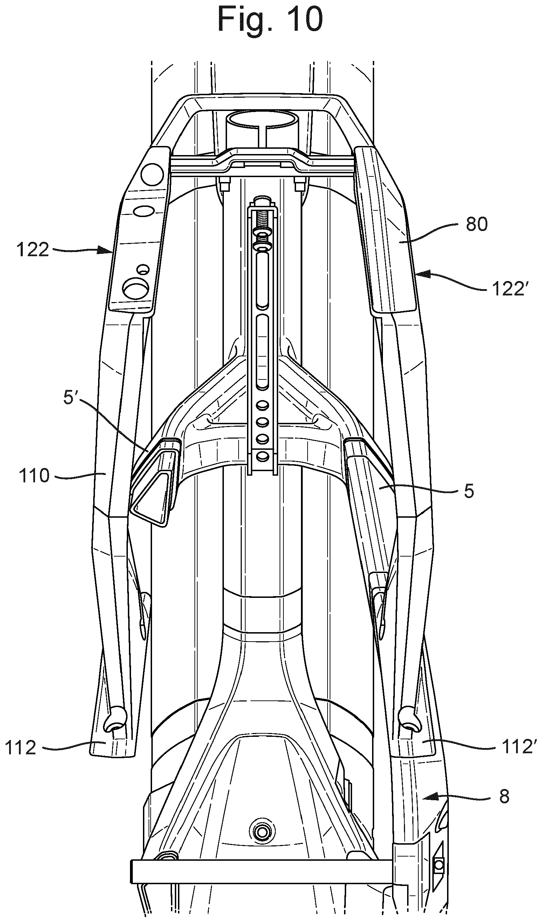

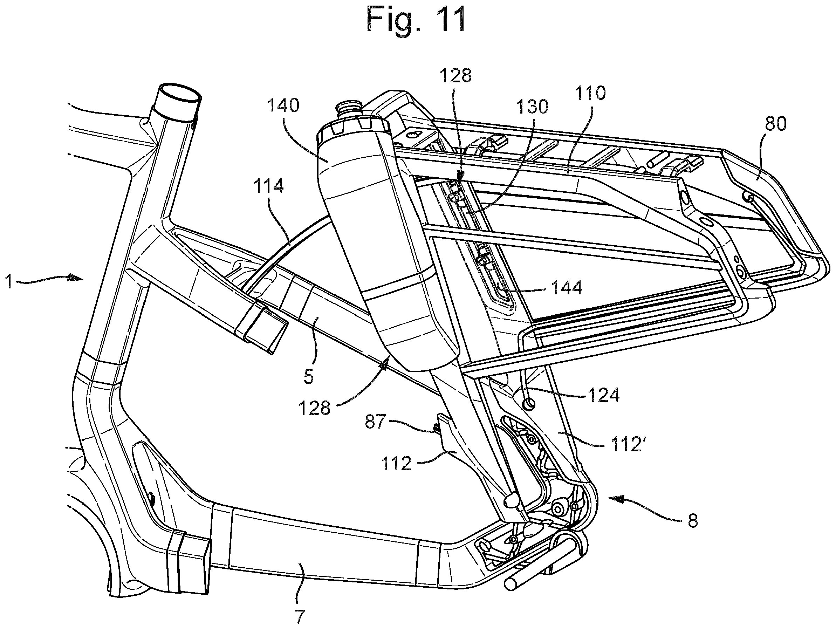

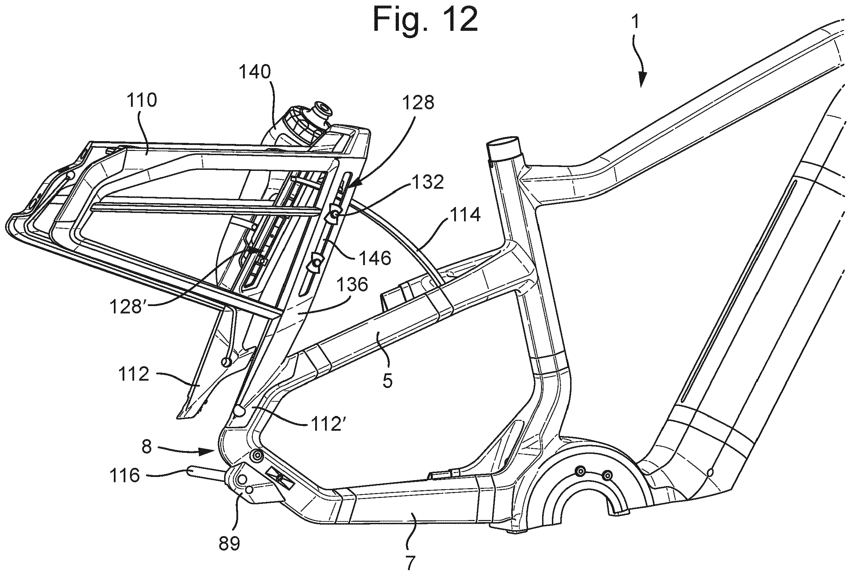

Wie in den Figuren 7 - 14 exemplarisch gezeigt, ist es möglich, an dem zuvor beschriebenen Fahrradrahmen einen Gepäckträger 110 zu befestigen. Der Gepäckträger 110 weist dazu optional wenigstens einen Aufnahmeschuh 112 auf, der komplementär zu der Aussparung 82 für ein Lichtelement 80 (siehe beispielsweise Fig. 1) am Ausfallende 8 des Fahrerrahmens ausgebildet ist. Ganz grundsätzlich gilt, dass ein solcher Gepäckträger 110, wie er im Folgenden beschrieben wird, an jeder Art von Fahrradrahmen befestigt werden kann, der eine entsprechend zu dem genannten Aufnahmeschuh 112 komplementäre Aussparung 82. Diese Aussparung 82 dient u.a. der Aufnahme eines Lichtelementes 80, wie es hierin bereits beschrieben wurde. Insofern gilt in Bezug auf diese Aussparung, das Lichtelement und sämtliche damit korrespondierenden Bauteile identisches wie hierin erwähnt.

Wesentlich ist das Bereitstellen eines Gepäckträgers 110, umfassend wenigstens einen Aufnahmeschuh 112, der komplementär zu einer Aussparung 82 für ein Lichtelement 80 an einem Fahrradrahmen ausgebildet ist. Der Aufnahmeschuh 112 ist derart ausgebildet, dass er anstelle des Lichtelementes 80 in der Aussparung 82 befestigt werden kann, um den Gepäckträger 110 am Fahrradrahmen 1 zu befestigen.

Unter Gepäckträger 110 wird jedes Anbauteil verstanden, das der Lagerung, Fixierung und/oder dem Transport von Gepäck dienen kann. Darüber hinaus werden aber auch solche Anbauteile verstanden, die der Fixierung weiterer Anbauteile, beispielsweise Schutzblechen, Beleuchtungen etc. dienen.

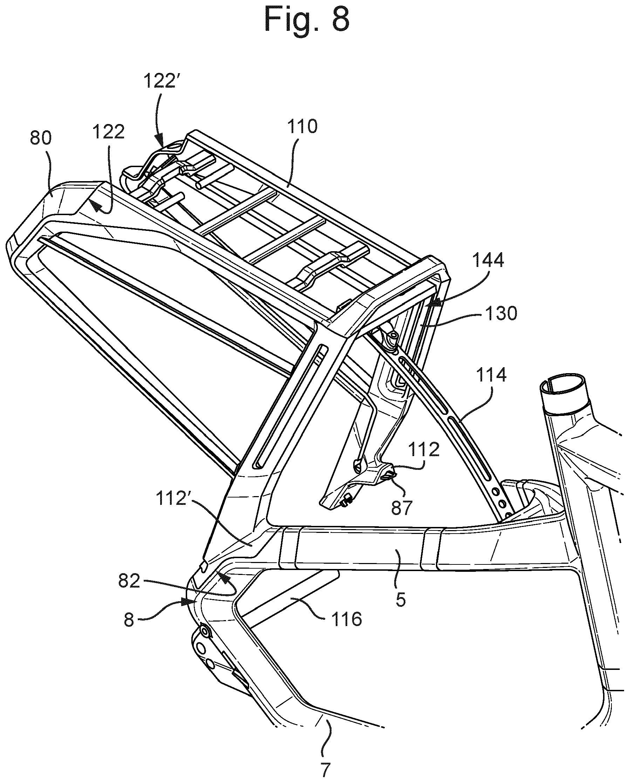

In den Figuren 8 ff ist der Fahrradrahmen 1 im Detail und teilgeschnitten dargestellt. So sind zur Verdeutlichung des Aufnahmeschuhs 112 des Gepäckträgers 110 die linksseitige Sitzstrebe 5, die linksseitige Kettenstrebe 7, und das korrespondierende Ausfallende 8 nicht dargestellt. Diese Bauteile entsprechen insbesondere spiegelverkehrt jedoch den rechtsseitigen korrespondierenden Bauteilen 5, 7, 8. Weiter teildargestellt ist eine Achse 116 zur Aufnahme eines Hinterrades.

Optional ist wenigstens ein Halteelement 114 vorgesehen, um den Gepäckträger 110 zusätzlich am Fahrradrahmen 1 und insbesondere an wenigstens einem ortsfest zu wenigstens einem Ausfallende 8 gelagerten Bauteil des Fahrradrahmens zu befestigen. Dieses Halteelement 114 kann beispielsweise ein Stabelement, ein Blechelement oder dergleichen Zug- oder Druckstab sein, der eine Kraftkopplung zwischen Gepäckträger und Fahrradrahmen herstellt. Das Halteelement kann als Trägerelement für ein Schutzblech oder dergleichen weitere Anbauteile (nicht dargestellt) ausgebildet werden. Wie im Folgenden noch beschrieben kann das Halteelement wenigstens ein Befestigungsmittel 128 aufweisen.

Optional umfasst der Aufnahmeschuh 112 Befestigungselementaufnahmen 88, zur Aufnahme von Befestigungselementen, über die der Aufnahmeschuh 112 und somit der Gepäckträger 110 am Fahrradrahmen 1 befestigt werden kann. Das können Durchführungen aber auch Arretierungsmittel wie Gewinde sein. Die Befestigungselemente sind vorzugsweise die Befestigungselemente 86 und/oder von den Abmessungen identische Befestigungselemente, die auch der Festlegung der Lichtelemente 80 in den jeweiligen Aussparungen 82 dienen. Optional weist der Aufnahmeschuh 112 wenigstens eine Führung 87 auf, die in wenigstens eine entsprechende Führungsaufnahme (nicht dargestellt) am Ausfallende 8 und/oder der Aussparung 82 eingreifen und so insbesondere eine Vorpositionierung des Aufnahmeschuhs 112 in der Aussparung 82 erlauben. Führung 87 und/oder Befestigungselementaufnahme sind optional identisch zu Führung 87 bzw. Befestigungselementaufnahme 88 am Lichtelement 80 ausgebildet. Die Befestigungselementaufnahmen 88 sind optional Bolzendurchführungen oder Aufnahmen. Die Befestigungselemente sind optional Bolzen oder dergleichen Schraub- oder lösbare Fixiermittel. Optional sind Befestigungselementaufnahmen 88 insbesondere in Form von Bolzendurchführungen oder dergleichen Durchführungen auch in einer weiteren Aussparung 122 und/oder Aussparung 82 vorgesehen. Diese sind beispielsweise in Fig. 7 dargestellt; sie dienen beispielsweise der Durchführung von genannten Befestigungselementen, also optional Bolzen oder dergleichen Schraub- oder lösbaren Fixiermitteln. Diese werden dann an den Befestigungselementaufnahmen 88 am Lichtelement 80 festgelegt.

Optional ist es denkbar, einen solchen Aufnahmeschuh 112 als eigenständiges Bauteil vorzusehen, der über Befestigungsaufnahmen verfügt, um daran Gepäckträger oder dergleichen Anbauteile zu befestigen. Auf diese Weise können sehr einfach Anbauteile an einem Fahrradrahmen befestigt werden. Es ist also wesentlich, dass erfindungsgemäß nicht nur ein Gepäckträger mit insbesondere integral ausgebildetem Aufnahmeschuh 112 zur Verfügung gestellt wird, sondern alternativ oder in Kombination auch ein Aufnahmeschuh, der den Anschluss eines solchen Gepäckträgers oder dergleichen Anbauteilen erlaubt. Hierzu können beispielsweise Bolzenaufnahmen, Einsetztaufnahmen, Befestigungsösen etc. am Aufnahmeschuh zur Festlegung des Gepäckträgers oder der anderen Anbauteile vorgesehen sein. Optional ist der Aufnahmeschuh integral mit dem Gepäckträger ausgebildet, es ist aber auch denkbar, den Aufnahmeschuh insbesondere lösbar am Gepäckträger zu befestigen. Auf diese Weise kann eine Vielzahl unterschiedlicher Gepäckträger mit entsprechenden Aufnahmeschuhen verbunden werden, um sie mit einem Fahrradrahmen mit Aussparungen 82 zu verwenden.

Optional weist der Gepäckträger 110 selbst insbesondere an seinem hinteren Ende weitere Aussparungen 122 auf, die der Aufnahme wenigstens eines Lichtelementes 80 dienen. Hier gilt alles, was zuvor zu einem Fahrradrahmen mit Lichtelement 80 in einer Aussparung 82 genannt wurde, identisch. Optional ist darüber hinaus die weitere Aussparung 122 derart ausgebildet, dass das Lichtelement 80, das in der Aussparung 82 des Fahrradrahmens 1 positionierbar ist, auch in der weiteren Aussparung 122 des Gepäckträgers positionierbar und dort festlegbar ist. Ein zur Aufnahme des Gepäckträgers 110 aus seiner Aussparung 82 entferntes Lichtelement 80 ist also optional in eine korrespondierende weitere Aussparung 122 am Gepäckträger einsetzbar und dort als Lichtelement verwendbar. Insbesondere weist es wenigstens einen Teil und/oder weitere der Beleuchtungsfunktionen auf, die es in seiner Aussparung am Fahrradrahmen hatte. Der Bereich der weiteren Aussparung 122, der der Aufnahme und Festlegung des Lichtelementes 80 dient, ist vorzugsweise identisch und insbesondere hinsichtlich der Aufnahme-, Positionierungs- und Befestigungsmittel identisch zur Aussparung 82 am Fahrradrahmen 1 ausgebildet.

Vorzugsweise sind an beiden Ausfallendenden 8 des Fahrradrahmens 1 und insbesondere symmetrisch zur Haupterstreckungsachse des Fahrrades Aufnahmen 82 und am Gepäckträger 110 korrespondierende Aufnahmeschuhe 112 ausgebildet.

Optional sind die Befestigungsmittel, Führungsmittel oder dergleichen Aufnahmemittel am Aufnahmeschuh 112 ausgebildet, die identisch zu entsprechenden Mitteln am Lichtelement ausgebildet sind. Die Aussparung122 ist optional so ausgebildet, dass sie über den Gepäckträger eingeleitete Normallasten über wenigstens eine Lägerfläche 120 wenigstens teilweise als Normalkräfte in den Fahrradrahmen ableiten kann.

Optional weist der Gepäckträger Kabelführungsmittel 124 auf, die insbesondere zwischen dem Aufnahmeschuh 112 des Gepäckträgers 110 und der weiteren Aussparung 122, insbesondere zur Aufnahme eines Lichtelementes 80 verlaufen. Über diese Kabelführungsmittel kann insbesondere eine elektrische Verbindung zwischen einem Anschlussmittel, ausgebildet zur elektrischen Kopplung mit einem Anschlussgegenmittel am Lichtelementes 80, das in der Aussparung 82 am Fahrradrahmen befestigt ist, und einem Anschlussgegenmittel am Lichtelement 80, wenn es in der weiteren Aussparung 122 des Gepäckträgers 110 aufgenommen ist, hergestellt werden. Optional sind in dem Kabelführungsmittel Kabel ortsfest verlegt und zwar derart, dass beim Einsetzen der Aufnahmeschuhe 112 in die Aussparung 82 eine Verbindung der Kabel mit Kabeln am Fahrradrahmen, insbesondere zur elektrischen Versorgung der dort in die Aussparung 82 einsatzbaren Lichtelemente 80, ohne Werkzeug möglich ist. Die Kabel weisen optional Anschlussmittel und/oder Anschlussgegenmittel zur Verbindung mit dem Lichtelement und/oder mit Kabeln im Fahrradrahmen auf. Es ist möglich, Anschlussmittel und/oder Anschlussgegenmittel so auszubilden, dass eine elektrische Konnektierung beim Einsetzen des Lichtelementes in die Aussparung erfolgt. Dazu weist beispielsweise das Lichtelement 80 ein Anschlussmittel auf und die Aussparung 82 und/ oder die weitere Aussparung 122 ein Anschlussgegenmittel auf, oder umgekehrt, die derart ausgebildet sind, das eine elektrische Verbindung zwischen Anschlussmittel und Anschluss Gegenmittel beim Einsetzen des Lichtelementes in die Aussparung hergestellt wird.

Das Lichtelement kann in der weiteren Aussparung 122 des Gepäckträgers 110 und/oder der Aussparung 82 des Fahrradrahmens 1 als Rücklicht, Blinklicht, Bremslicht, Nummernschildbeleuchtung, Signallicht, Richtungsanzeiger oder jeder anderen Art von Signallampe dienen. Das Lichtelement kann darüber hinaus einen Reflektor aufweisen.

Optional ist am Gepäckträger 110 ein Befestigungsmittel 128 zur Befestigung weiterer Anbauteile vorgesehen. Das Befestigungsmittel 128 ist nicht nur an dem Gepäckträger 110, sondern an jedem anderen Anbauteil und am Fahrrad 1 selbst anwendbar. Exemplarisch ist das Befestigungsmittel 128 auch am Unterrohr 10 des Fahrradrahmens 1 (siehe Fig. 7) dargestellt.

Das Befestigungsmittel 128 umfasst ein Schlitzelement 130, das der Aufnahme eines Haltemittels 132 zur Befestigung eines Anbauteile140 dienen kann. Das Haltemittel 132 kann ein Bolzen sein, eine Schraube, ein Klemmmittel oder jede andere Art von Haltemittel, das durch den Schlitz des Schlitzelementes 130 geschoben und am Anbauteil 140 unter Fixierung des Anbauteils am Schlitz befestigt werden kann. Das Schlitzelement 130 kann beispielsweise in einer Seitenstrebe 136 des Gepäckträgers 110 und insbesondere einer Seitenstrebe, die direkt mit dem Aufnahmeschuh 112 verbunden ist, vorgesehen sein. Es ist auch möglich, ein solches Schlitzelement 130 in dem Halteelement 114 vorzusehen.

Das Schlitzelement kann beispielsweise eine Schlitznut mit geschlossenem Boden, insbesondere zur Aufnahme eines Nutensteins und/oder ein Schlitz mit in Axialrichtung des Schlitzes verlaufendem länglichem Freiraum 146 sein, der insbesondere einen Aufnahmeraum mit achsenparallelen Seitenwänden definiert.

Durch oder in das Schlitzelement kann beispielsweise ein Haltemittel 132 in Form eines Bolzens, oder dergleichen Schraub- oder lösbaren Fixiermittels etc. ein- bzw. hindurchgeschoben und mittels eines Konterelementes 138 im, am und/oder hinter dem Schlitz fixiert werden. Das Konterelement 138 kann ein eigenes Bauteil sein, es kann aber auch am Anbauteil 140 vorgesehen sein. Überdas Schlitzelement ist optional eine Längsverschiebbarkeit der Montageposition des Anbauteils entlang der Achse des Schlitzelementes gewährleistbar.

Das Schlitzelement 130 weist insbesondere auf seiner dem Anbauteil 140 im montierten Zustand abgewandten Seite vorzugsweise eine 144 Nut auf, die der Aufnahme wenigstens eines Teils des Haltemittels 132 oder eines Konterelementes 138 dient, also beispielsweise eines Bolzenkopfes. Diese Nut erstreckt sich optional wenigstens abschnittsweise entlang des Schlitzes, insbesondere um so eine Längsverschiebbarkeit des Bolzenkopfes bzw. des Konterelementes, insbesondere zusammen mit dem Anbauteil zu gewährleisten. Optional erstreckt sich die Nut 144 entlang des gesamten Schlitzes. Optional ist das Anbauteil entlang des Schlitzes verschiebbar und in einer Mehrzahl an Positionen am Schlitz festlegbar.

Über das beschriebene Schlitzelement kann, beispielsweise bei dem hier gezeigten Gepäckträger, ein Flaschenhalter, wenigstens eine Gepäcktasche, ein Beleuchtungselement etc. sehr einfach befestigt werden.

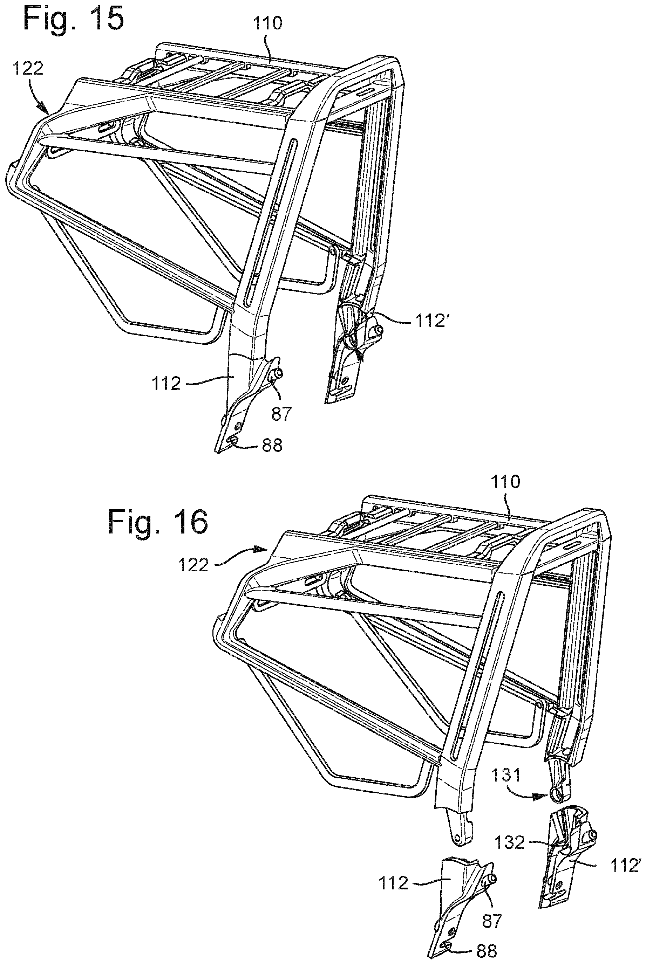

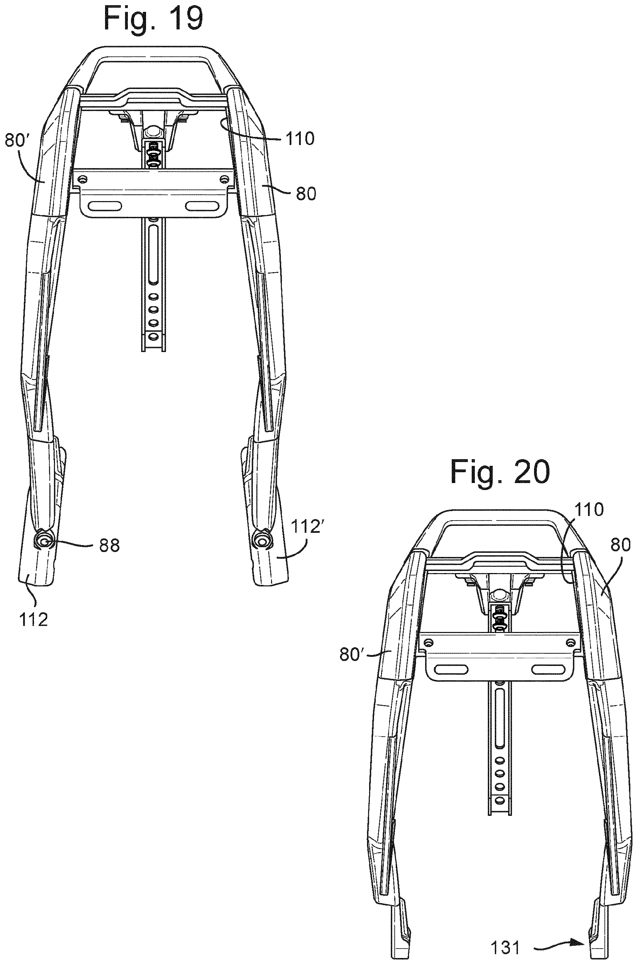

Die Fig. 15 bis 24 zeigen weitere Ausführungsformen des Gepäckträgers 110 und somit auch weitere mögliche Ausführungsformen des erfindungsgemäßen Fahrradrahmens 1 bzw. Fahrrades 100 gemäß Fig. 1 sowie Ausführungsformen des Lichtelementes 80 und des Aufnahmeschuhs 112. Sämtliches zur vorherigen Ausführungsform Beschriebene ist auf die Ausführungsform gemäß den Fig. 15 bis 24 übertragbar und andersherum. Die hier dargestellten Ausführungsformen sind in Verbindung mit dem in Fig. 1 dargestellten Fahrrad bzw. dem in Fig. 7 dargestellten Fahrradrahmen verwendbar und umgekehrt. Insofern gilt das in Fig. 1 dargestellte Fahrrad bzw. der in Fig. 7 dargestellte Fahrradrahmen in Verbindung mit den Fig. 15 bis 24 als weitere Ausführungsformen darstellend.

Fig. 1 zeigt in Verbindung mit den Fig. 15 ff. weitere Ausführungsformen eines Fahrrades, umfassend einen Fahrradrahmen 1 (siehe hier auch Fig. 7), wobei an einem Ausfallende 8 des Fahrradrahmens, wenigstens eine Aussparung 82 vorgesehen ist, die derart ausgebildet ist, dass darin ein Lichtelement 80 einsetzbar und befestigbar ist, und, anstelle des Lichtelements 80, ein Aufnahmeschuh 112 einsetzbar und befestigbar ist, wobei der Aufnahmeschuh mit einem Gepäckträger 110 oder weiteren Anbauteilen verbunden ist oder daran befestigbar ist. Wie insbesondere in Fig. 15 dargestellt, ist der Aufnahmeschuh 112 optional komplementär zur Aussparung 82 ausgebildet. Weiter ist der Aufnahmeschuh optional formschlüssig in der Aussparung 82 aufnehmbar ausgebildet.

Die Aussparung 82 umfasst optional wenigstens eine Lagerfläche 120 derart, dass über den Gepäckträger 110 eingeleitete Normallasten als Normalkräfte in den Fahrradrahmen 1 abgeleitet werden. Dies ist durch eine Kombination der Fig. 15 und 7 dargestellt.

Bei dieser Ausführungsform ist optional der Aufnahmeschuh 112 mit einem Montagemittel insbesondere lösbar am Gepäckträger 110 befestigbar (siehe u.a. Fig. 15 und 16). Das Montagemittel kann beispielsweise einen Fortsatz 131 umfassen, der in eine Fortsatzaufnahme 132 einsetzbar ist. Auch können entsprechende Schraub- oder Bolzenverbindungen sowie jede andere Art von Verbindungen verwendet werden, um den Gepäckträger am Aufnahmeschuh 112 zu befestigen. Optional ist das Montagemittel als Formschlusselement ausgebildet, sodass der Aufnahmeschuh unter Formschluss am Gepäckträger befestigbar ist. Formschluss bedeutet optional, das eine Aufnahmebauteil ein Einsteckbauteil wenigstens teilweise und unter wenigstens temporärer Befestigung formschlüssig umgibt. Eine Endfixierung kann optional über ein Befestigungsmittel, bspw. einen Bolzen, eine Schraube, eine Klemme etc. erfolgen.

Weiter ist der Aufnahmeschuh 112 optional relativ zum Gepäckträger 110 oder dem weiteren anderen Anbauteil bewegbar, und insbesondere um eine Achse koaxial zu einer Radachse R_{A} des Fahrrades 100 (siehe insbesondere Fig. 1), verschwenkbar, am Gepäckträger 110 bzw. dem weiteren anderen Anbauteil angeordnet bzw. anordbar. Auf diese Weise kann der Gepäckträger relativ zum Fahrradrahmen 1 ausgerichtet und insbesondere seine Gepäckfläche dazu ausgerichtet werden.

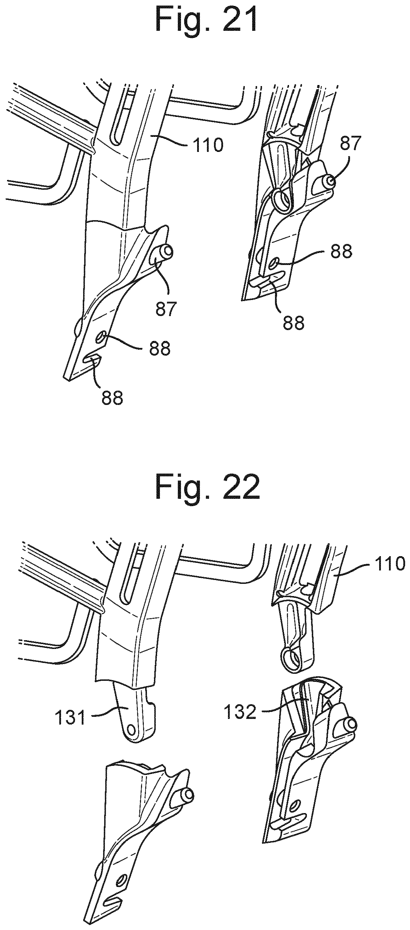

In Bezug auf die Befestigung des Aufnahmeschuhs 112 und/oder des Lichtelementes 80 am Fahrradrahmen bzw. Gepäckträger gilt optional zuvor Gesagtes identisch. Optional ist dabei der Aufnahmeschuh und/oder das Lichtelement mittels Befestigungsmittel an der Aussparung 82 fixierbar oder umgekehrt. Insbesondere ist optional der Aufnahmeschuh oder das Lichtelement mittels Befestigungselemente 86, die am Aufnahmeschuh 112 und/oder am Lichtelement 80 festlegbar sind, und mit Befestigungselementaufnahmen am Fahrradrahmen 1, und insbesondere am Ausfallende 8, in Kraftkopplung bringbar oder umgekehrt. Bei dieser Ausführungsform ist eine Befestigung beispielsweise mittels Vorsprüngen möglich, die an der Aussparung 82 vorgesehen sind, und in die der Aufnahmeschuh 112 eingeschoben werden kann. Übereine weitere Befestigung mittels Schraubverbindung durch das Befestigungselement 86 kann der Aufnahmeschuh dann in der Aussparung 82 fixiert werden. Auch hier sind optional Führungen 87 vorgesehen (siehe Fig. 21). Diese Führungen 87 können, wie auch schon zuvor erwähnt, der Vorpositionierung dienen.

Wie in Fig. 1 dargestellt, ist optional die Aussparung 82 bezüglich einer Rollebene des Fahrrades 100 betrachtet oberhalb der Achsaufnahme 89 zur Aufnahme des Hinterrades 6 im Fahrradrahmen angeordnet. Insbesondere bei der Ausbildung des Lichtelementes als Rücklicht ist dies besonders vorteilhaft. Das Lichtelement kann optional als Rücklicht und/oder Bremslicht und/oder als Blink- oder dergleichen Licht ausgebildet sein. Es ist auch eine Verwendung als Nummernschildbeleuchtung denkbar.

Wie insbesondere in Fig. 7 dargestellt, weist der Gepäckträger 110 optional, insbesondere an seinem in Axialrichtung des Fahrrades 100 betrachteten hinteren Ende, wenigstens eine weitere Aussparung 122 auf. Diese weitere Aussparung 122 dient der optionalen Aufnahme wenigstens eines Lichtelementes 80 und/oder eines Aufnahmeschuhs 112. Optional ist die weitere Aufnahme 112 derart ausgebildet, dass darin ein Lichtelement 80 und/oder ein Aufnahmeschuh 112 einsetzbar und befestigbar ist, die in die Aussparungen 82 einsetzbar und dort befestigbar sind. Insofern ist optional die weitere Aussparung 122 wenigstens Abschnittsweise identisch und/oder komplementär zur Aussparung 82 ausgebildet. Optional sind die weitere Aussparung 122 und die Aussparung 82 so ausgebildet, dass dieselben Elemente bzw. Schuhe darin einsetzbar sind.

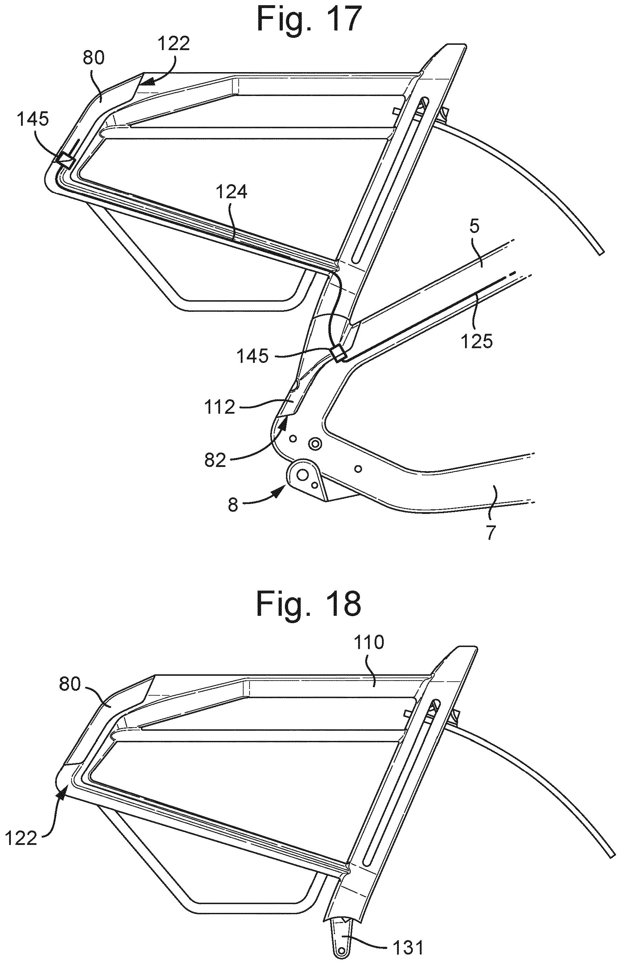

Insbesondere zum Anschluss der Lichtelemente weist der Gepäckträger optional Kabelführungsmittel 124 auf, die insbesondere zwischen dem Aufnahmeschuh 112 des Gepäckträgers 110 und der weiteren Aussparung 122 verlaufen. Die Kabelführungsmittel sind im Bereich des Aufnahmeschuhs mit Kabelführungsmitteln 125 des Fahrrades und/oder im Bereich der weiteren Aussparung 122 mit dem Lichtelement 80 oder einem weiteren Anbauteil elektrisch leitend verbindbar. Dies ist beispielsweise schematisch in Fig. 17 dargestellt, wobei hier ein Ausschnitt des Ausfallendes 8 des Fahrradrahmens dargestellt ist. Optionale Konnektierungsmittel zwischen den einzelnen Kabelführungsmitteln 124, 125 und dem Lichtelement 80 sind exemplarisch durch das Bezugszeichen 145 dargestellt.

Grundsätzlich ist es denkbar, anstelle eines Lichtelementes 80 bzw. eines Aufnahmeschuhs 112 ein Abdeckelement vorzusehen, das der Abdeckung der Aussparung 82 bzw. der weiteren Aussparung 122 dient.

Wie erwähnt, betrifft die Erfindung auch ein Lichtelement 80 für ein Fahrrad 100, wie es beispielsweise in Fig. 1 dargestellt ist, und wie es hier beschrieben ist, das derart ausgebildet ist, dass es in die Aussparung 82 des Fahrradrahmens 1 einsetzbar und befestigbar ist. Ein solches Lichtelement ist exemplarisch unter anderem in den Fig. 6 bzw. 17 und 18 dargestellt.

Selbiges gilt für einen Aufnahmeschuh 112 für ein Fahrrad, der derart ausgebildet ist, dass er in die Aussparung 82 des Fahrradrahmens 1, wie er beispielsweise in Fig. 7 dargestellt ist, einsetzbar und befestigbar ist, wobei der Aufnahmeschuh 112 mit einem Gepäckträger 110 oder weiteren Anbauteilen verbunden ist oder daran befestigbar ist. Eine Form, an der der Anbauschuh befestigt ist, ist exemplarisch in den Fig. 7 ff. dargestellt, während eine Form mit lösbar angeordnetem Anbauschuh in den Fig. 15 ff. dargestellt ist. Selbiges gilt für einen Gepäckträger oder ein weiteres Anbauteil für ein Fahrrad, wie es hier beschrieben ist, das einen solchen Aufnahmeschuh 112 umfasst.

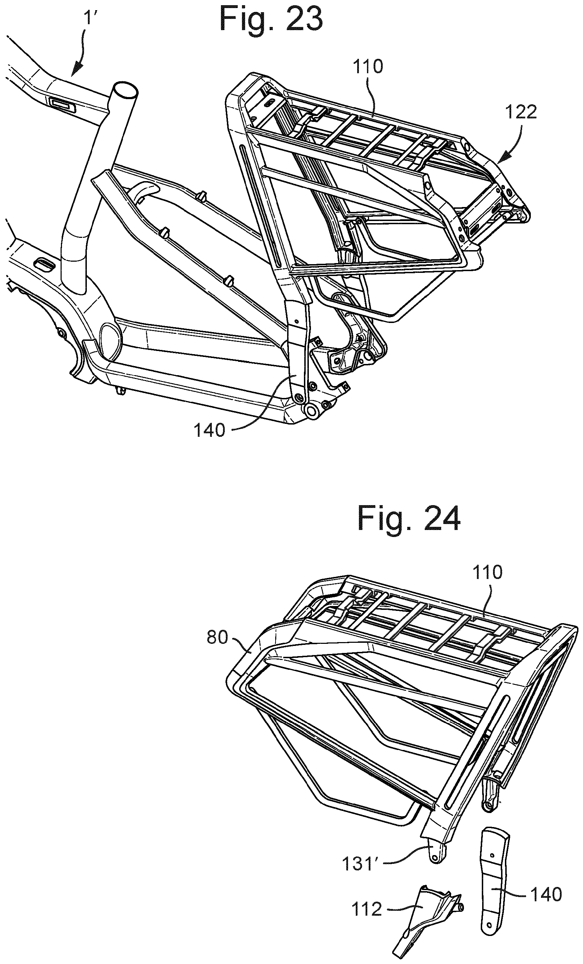

In den Fig. 23 und 24 ist eine weitere Ausführungsform dargestellt, bei der ein Adaptermittel 140 vorgesehen ist, das derart am Gepäckträger 110 befestigbar ist, dass dieser an einem Standardrahmen ohne Aussparung 82 befestigbar ist. Der Gepäckträger 110 ist dabei optional so ausgebildet, dass alternativ der erfindungsgemäße Aufnahmeschuh 112 oder das Adaptermittel 140 verwendbar ist. Auch ist es möglich, einen Gepäckträger 110 so auszubilden, dass er mit einem Aufnahmeschuh 112 am erfindungsgemäßen Fahrradrahmen umfassend die Aussparung 82 befestigt werden kann, und ohne den Aufnahmeschuh 112 mit aus dem Stand der Technik bekannten Standardbefestigungsmitteln, beispielsweise Schraubbolzen oder Klemmen, an einem anderen optional einem Standart-Fahrradrahmen befestigt werden kann.

Wie erwähnt betrifft die Erfindung auch ein Verfahren zum Befestigen eines Gepäckträgers 110 an einem Fahrrad 100, wie dies in den vorliegenden Figuren exemplarisch dargestellt ist. Das Verfahren umfasst die folgenden Schritte: Entfernen eines Lichtelementes 80 des Fahrrades 100 aus einer Aussparung 82 an einem Ausfallende 8 am Fahrradrahmen 1 des Fahrrades 100, wobei das Lichtelement 80 im eingesetzten Zustand oberflächenbündig im Fahrradrahmen 1 am Ausfallende 8 aufgenommen ist; Einsetzten und Befestigen eines Aufnahmeschuhs 112 in die Aussparung 82 am Fahrradrahmen 1, wobei am Aufnahmeschuh 112 der Gepäckträger 110 befestigt oder befestigbar ist; Einsetzten und Befestigen des entfernten Lichtelementes 80 in eine weitere Aussparung 122 am Gepäckträger 110.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein; mehrere "Mittel" können durch denselben Gegenstand bzw. unterschiedliche Gegenstände oder implementierte Struktur oder Funktion dargestellt werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

## Patentansprüche

1. Fahrrad, umfassend einen Fahrradrahmen (1), wobei am Fahrradrahmen wenigstens eine Aussparung (82) vorgesehen ist, die derart ausgebildet ist, dass darin ein Lichtelement befestigbar ist und, anstelle des Lichtelements (80), ein Aufnahmeschuh (112) einsetzbar und befestigbar ist, wobei der Aufnahmeschuh mit einem Gepäckträger (110) oder weiteren Anbauteilen verbunden ist oder daran befestigbar ist, wobei
die Aussparung (2) an einem Ausfallende (8) des Fahrradrahmens (1) angeordnet ist,
**dadurch gekennzeichnet, dass**
das Lichtelement (80) in die Aussparung (82) einsetzbar ist und im eingesetzten Zustand oberflächenbündig im Fahrradrahmen (1) am Ausfallende (8) aufgenommen ist.

2. Fahrrad nach Anspruch 1,
**dadurch gekennzeichnet, dass**
der Aufnahmeschuh (112) formschlüssig in der Aussparung (82) aufnehmbar ausgebildet ist.

3. Fahrrad nach Anspruch 1 oder 2,
**dadurch gekennzeichnet, dass**
die Aussparung (82) wenigstens eine Lägerfläche (120) derart aufweist, dass über den Gepäckträger (110) eingeleitete Normallasten als Normalkräfte in den Fahrradrahmen (1) ableitet werden.

4. Fahrrad nach einem der vorhergehenden Ansprüche,
**dadurch gekennzeichnet, dass**
der Aufnahmeschuh (112) mit wenigstens einem Montagemittel insbesondere lösbar am Gepäckträger (110) befestigbar ist.

5. Fahrrad nach einem der vorhergehenden Ansprüche,
**dadurch gekennzeichnet, dass**
der Aufnahmeschuh (112) relativ zum Gepäckträger (110) oder den weiteren Anbauteilen bewegbar, und insbesondere um eine Achse coaxial zu einer Radachse des Fahrrades (100) verschwenkbar, am Gepäckträger (110) bzw. den weiteren Anbauteilen angeordnet bzw. anordbar ist.

6. Fahrrad nach einem der vorhergehenden Ansprüche,
**dadurch gekennzeichnet, dass**
der Aufnahmeschuh (112) und/oder das Lichtelement (80) mittels Befestigungsmitteln an der Aussparung (82) fixierbar sind, und insbesondere mittels Befestigungselementen (86), die am Aufnahmeschuh (112) und/oder am Lichtelement (80) festlegbar sind und mit Befestigungselementaufnahmen am Ausfallende (8) in Kraftkopplung bringbar sind, oder umgekehrt.

7. Fahrrad nach einem der vorhergehenden Ansprüche,
**dadurch gekennzeichnet, dass**
am Aufnahmeschuh (112) und/oder am Lichtelement (80) Führungen (87) vorgesehen sind, die in entsprechende Führungsaufnahmen am Ausfallende (8) eingreifen und so insbesondere eine Vorpositionierung des Aufnahmeschuhs (112) bzw. des Lichtelements (80) in der Aussparung (82) erlauben.

8. Fahrrad nach einem der vorhergehenden Ansprüche,
**dadurch gekennzeichnet, dass**
das Lichtelement (80) derart ausgebildet ist, dass es im eingesetzten Zustand von der Fahrradrückseite und auch seitlich zum Fahrrad (100) erkennbar ist.

9. Fahrrad nach einem der vorhergehenden Ansprüche,
**dadurch gekennzeichnet, dass**
die Aussparung (82), bezüglich einer Rollebene des Fahrrades (100) betrachtet, oberhalb einer Achsaufnahme (89) zur Aufnahme eines Hinterrades (6) im Fahrradrahmen (1) angeordnet ist.

10. Fahrrad nach einem der vorhergehenden Ansprüche,
**dadurch gekennzeichnet, dass**
der Gepäckträger (110), insbesondere an seinem in Axialrichtung des Fahrrades (100) betrachtet hinteren Ende, wenigstens eine weitere Aussparung (122) aufweist, die der Aufnahme wenigstens eines weiteren Lichtelementes (80) und/oder eines weiteren Aufnahmeschuhs (112) dient, wobei optional die weitere Aussparung (122) derart ausgebildet ist, dass darin das Lichtelement (80) und/oder der Aufnahmeschuh (112) einsetzbar und befestigbar sind, die in die Aussparung (82) einsetzbar und dort befestigbar sind.

11. Fahrrad nach Anspruch 10,
**dadurch gekennzeichnet, dass**
der Gepäckträger (110) Kabelführungsmittel (124) aufweist, die insbesondere zwischen dem Aufnahmeschuh (112) des Gepäckträgers (110) und der weiteren Aussparung (122) verlaufen, wobei die Kabelführungsmittel (124) im Bereich des Aufnahmeschuhs (112) mit Kabelführungsmitteln (125) des Fahrrades (100) und/oder im Bereich der weiteren Aussparung (122) mit dem Lichtelement (80) oder einem weiteren Anbauteil elektrisch leitend verbindbar sind.

12. Fahrradrahmen für ein Fahrrad (100) nach einem der vorhergehenden Ansprüche, wobei am Fahrradrahmen (1) wenigstens eine Aussparung (82) vorgesehen ist, die derart ausgebildet ist, dass darin ein Lichtelement (80) befestigbar ist und, anstelle des Lichtelements (80), ein Aufnahmeschuh (112) einsetzbar und befestigbar ist, wobei der Aufnahmeschuh (112) mit einem Gepäckträger (110) oder weiteren Anbauteilen verbunden ist oder daran befestigbar ist, wobei
die Aussparung (82) an einem Ausfallende (8) des Fahrradrahmens (1) angeordnet ist,
**dadurch gekennzeichnet, dass**
das Lichtelement (80) in die Aussparung (82) einsetzbar ist und im eingesetzten Zustand oberflächenbündig im Fahrradrahmen (1) am Ausfallende (8) aufgenommen ist.

13. Lichtelement für ein Fahrrad (100) nach einem der vorhergehenden Ansprüche 1 - 11, **dadurch gekennzeichnet, dass** das Lichtelement (80) derart ausgebildet ist, dass es in die Aussparung (82) am Ausfallende (8) des Fahrradrahmens (1) einsetzbar und befestigbar ist, wobei das Lichtelement (80) im eingesetzten Zustand oberflächenbündig im Fahrradrahmen (1) am Ausfallende (8) aufgenommen ist.

14. Verfahren zum Befestigen eines Gepäckträgers (110) an einem Fahrrad (100) umfassend die folgenden Schritte:
• Entfernen eines Lichtelementes (80) des Fahrrades (100) aus einer Aussparung (82) an einem Ausfallende (8) am Fahrradrahmen (1) des Fahrrades (100), wobei das Lichtelement (80) im eingesetzten Zustand oberflächenbündig im Fahrradrahmen (1) am Ausfallende (8) aufgenommen ist;
• Einsetzten und Befestigen eines Aufnahmeschuhs (112) in die Aussparung (82) am Fahrradrahmen (1), wobei am Aufnahmeschuh (112) der Gepäckträger (110) befestigt oder befestigbar ist;
• Einsetzten und Befestigen des entfernten Lichtelementes (80) in eine weitere Aussparung (122) am Gepäckträger (110).

## Claims

1. Bicycle, comprising a bicycle frame (1), with at least one recess (82) being provided on the bicycle frame, which is designed in such a way that a lighting element can be fixed therein and, instead of the lighting element (80), a receiving shoe (112) can be inserted and fixed, wherein the receiving shoe is connected to a luggage carrier (110) or other add-on parts or can be fixed thereto, wherein
the recess (2) is arranged on a dropout (8) of the bicycle frame (1),
**characterised in that**
the lighting element (80) can be inserted into the recess (82) and, when inserted, is accommodated flush with the surface in the bicycle frame (1) at the dropout (8).

2. Bicycle according to claim 1,
**characterised in that**
the receiving shoe (112) is designed so that it can be received in a form-fitting manner in the recess (82).

3. Bicycle according to claim 1 or 2,
**characterised in that**
the recess (82) has at least one storage surface (120) such that normal loads introduced via the luggage carrier (110) are diverted as normal forces into the bicycle frame (1).

4. Bicycle according to any one of the preceding claims,
**characterised in that**
the receiving shoe (112) can be fixed in particular releasably to the luggage carrier (110) with at least one mounting means.

5. Bicycle according to any one of the preceding claims,
**characterised in that**
the receiving shoe (112) is arranged or can be arranged on the luggage carrier (110) or the other add-on parts so as to be movable relative to the luggage carrier (110) or the other add-on parts, and in particular pivotable about an axis coaxially to a wheel axis of the bicycle (100).

6. Bicycle according to any one of the preceding claims,
**characterised in that**
the receiving shoe (112) and/or the lighting element (80) can be fixed to the recess (82) by means of fastening means, and in particular by means of fastening elements (86) which can be fixed to the receiving shoe (112) and/or to the lighting element (80) and can be brought into force coupling with fastening element receptacles on the dropout (8), or vice versa.

7. Bicycle according to any one of the preceding claims,
**characterised in that**
guides (87) are provided on the receiving shoe (112) and/or on the lighting element (80) which engage in corresponding guide receptacles on the dropout (8) and thus allow in particular prepositioning of the receiving shoe (112) or the lighting element (80) in the recess (82).

8. Bicycle according to any one of the preceding claims,
**characterised in that**
the lighting element (80) is designed in such a way that, when inserted, it can be seen from the rear of the bicycle and also from the side of the bicycle (100).

9. Bicycle according to any one of the preceding claims,
**characterised in that**
the recess (82), viewed with respect to a rolling plane of the bicycle (100), is arranged above an axle receptacle (89) for receiving a rear wheel (6) in the bicycle frame (1).

10. Bicycle according to any one of the preceding claims,
**characterised in that**
the luggage carrier (110), in particular at its rear end as viewed in the axial direction of the bicycle (100), has at least one further recess (122) which can be used for receiving at least one further lighting element (80) and/or one further receiving shoe (112), the further recess (122) optionally being designed in such a way that the lighting element (80) and/or the receiving shoe (112) can be inserted and fixed therein, which can be inserted into the recess (82) and fixed there.

11. Bicycle according to claim 10,
**characterised in that**
the luggage carrier (110) has cable guiding means (124) which run in particular between the receiving shoe (112) of the luggage carrier (110) and the further recess (122), wherein the cable guiding means (124) in the region of the receiving shoe (112) are connectable with cable guiding means (125) of the bicycle (100) and/or in the region of the further recess (122) are connectable with the lighting element (80) or with a further attachment in an electrically conductive manner.

12. Bicycle frame for a bicycle (100) according to any one of the preceding claims, wherein at least one recess (82) is provided on the bicycle frame (1) which is designed in such a way that a lighting element (80) can be fixed therein and, instead of the lighting element (80), a receiving shoe (112) can be inserted and fixed, wherein the receiving shoe (112) is connected or can be fixed to a luggage carrier (110) or other add-on parts, wherein the recess (82) is arranged on a dropout (8) of the bicycle frame (1),
**characterised in that**
the lighting element (80) can be inserted into the recess (82) and, when inserted, is accommodated flush with the surface in the bicycle frame (1) at the dropout (8).

13. Lighting element for a bicycle (100) according to any one of the preceding claims 1-11, **characterised in that** the lighting element (80) is designed such that it can be inserted and fixed in the recess (82) on the dropout (8) of the bicycle frame (1), wherein the lighting element (80), when inserted, is accommodated flush with the surface in the bicycle frame (1) at the dropout (8).

14. Method for fixing a luggage carrier (110) to a bicycle (100) comprising the following steps:
• Removing a lighting element (80) of the bicycle (100) from a recess (82) on a dropout (8) on the bicycle frame (1) of the bicycle (100), wherein the lighting element (80), when inserted, is accommodated flush with the surface in the bicycle frame (1) at the dropout (8);
• Inserting and fixing a receiving shoe (112) in the recess (82) on the bicycle frame (1), wherein the luggage carrier (110) is fixed or can be fixed to the receiving shoe (112);
• Inserting and fixing the removed lighting element (80) in a further recess (122) on the luggage carrier (110).

## Revendications

1. Bicyclette, comprenant un cadre de bicyclette (1), dans laquelle contre le cadre de bicyclette est prévu au moins un évidement (82) qui est conçu de telle sorte qu'en son intérieur un élément de lumière puisse être fixé et, à la place de l'élément de lumière (80), un talon de logement (112) puisse être inséré et fixé, dans laquelle le talon de logement est relié à ou peut être fixé contre un porte-bagages (110) ou d'autres pièces rapportées, dans laquelle
l'évidement (2) est agencé contre une patte d'extrémité (8) du cadre de bicyclette (1),
**caractérisée en ce que**
l'élément de lumière (80) peut être inséré dans l'évidement (82) et est logé, à l'état inséré et par affleurement de surfaces, dans le cadre de bicyclette (1) contre la patte d'extrémité (8).

2. Bicyclette selon la revendication 1,
**caractérisée en ce que**
le talon de logement (112) est conçu pour pouvoir être logé dans l'évidement (82) par liaison de formes.

3. Bicyclette selon la revendication 1 ou 2,
**caractérisée en ce que**
l'évidement (82) présente au moins une surface d'appui (120) telle que des charges normales engagées par-dessus le porte-bagages (110) soient dérivées en tant qu'efforts normaux jusque dans le cadre de bicyclette (1).

4. Bicyclette selon l'une des revendications précédentes,
**caractérisée en ce que**
le talon de logement (112) peut être fixé en particulier de façon amovible contre le porte-bagages (110) avec au moins un moyen de montage.

5. Bicyclette selon l'une des revendications précédentes,
**caractérisée en ce que**
le talon de logement (112) est ou peut être agencé contre le porte-bagages (110) ou les autres pièces rapportées, en pouvant être déplacé par rapport au porte-bagages (110) ou aux autres pièces rapportées, et en particulier en pouvant être pivoté autour d'un axe de façon coaxiale par rapport à un axe de roue de la bicyclette (100).

6. Bicyclette selon l'une des revendications précédentes,
**caractérisée en ce que**
le talon de logement (112) et/ou l'élément de lumière (80) peuvent être fixés contre l'évidement (82) au moyen de moyens de fixation, et en particulier au moyen d'éléments de fixation (86) qui peuvent être immobilisés contre le talon de logement (112) et/ou contre l'élément de lumière (80) et peuvent être amenés par force d'accouplement avec des logements d'élément de fixation contre la patte d'extrémité (8), ou inversement.

7. Bicyclette selon l'une des revendications précédentes,
**caractérisée en ce que**
contre le talon de logement (112) et/ou contre l'élément de lumière (80) sont prévus des guidages (87) qui viennent en prise contre la patte d'extrémité (8) dans des logements de guidage correspondantes et permettent ainsi en particulier un pré-positionnement du talon de logement (112) ou de l'élément de lumière (80) dans l'évidement (82).

8. Bicyclette selon l'une des revendications précédentes,
**caractérisée en ce que**
l'élément de lumière (80) est conçu de telle sorte que, à l'état inséré, il puisse être détecté depuis le côté d'appui de bicyclette et également latéralement par rapport à la bicyclette (100).

9. Bicyclette selon l'une des revendications précédentes,
**caractérisée en ce que**
l'évidement (82) est agencé par-dessus un logement d'axe (89) pour le logement d'une roue arrière (6) dans le cadre de bicyclette (1), considéré par rapport à un plan de roulement de la bicyclette (100).

10. Bicyclette selon l'une des revendications précédentes,
**caractérisée en ce que**
le porte-bagages (110), en particulier contre son extrémité arrière considéré dans la direction axiale de la bicyclette (100), présente au moins un autre évidement (122) qui sert au logement d'au moins un autre élément de lumière (80) et/ou d'un autre talon de logement (112), dans lequel de façon optionnelle l'autre évidement (122) est conçu de telle sorte qu'en son intérieur l'élément de lumière (80) et/ou le talon de logement (112) puissent être insérés et fixés, qui peuvent être insérés dans l'évidement (82) et y être fixés.

11. Bicyclette selon la revendication 10,
**caractérisée en ce que**
le porte-bagages (110) présente des moyens de guidage de câble (124) qui se déroulent en particulier entre le talon de logement (112) du porte-bagages (110) et l'autre évidement (122), dans lequel les moyens de guidage de câble (124) peuvent être reliés de façon électriquement conductrice avec des moyens de guidage de câble (125) de la bicyclette (100) dans la zone du talon de logement (112), et/ou avec l'élément de lumière (80) ou une autre pièce rapportée dans la zone de l'autre évidement (122).

12. Cadre de bicyclette pour une bicyclette (100) selon l'une des revendications précédentes, dans lequel contre le cadre de bicyclette (1) est prévu au moins un évidement (82) qui est conçu de telle sorte qu'en son intérieur un élément de lumière (80) puisse être fixé et, à la place de l'élément de lumière (80), un talon de logement (112) puisse être inséré et fixé, dans lequel le talon de logement (112) est relié à ou peut être fixé contre un porte-bagages (110) ou d'autres pièces rapportées, dans lequel
l'évidement (82) est agencé contre une patte d'extrémité (8) du cadre de bicyclette (1),
**caractérisé en ce que**
l'élément de lumière (80) peut être inséré dans l'évidement (82) et est logé, à l'état inséré et par affleurement de surfaces, dans le cadre de bicyclette (1) contre la patte d'extrémité (8).

13. Élément de lumière pour une bicyclette (100) selon l'une des revendications précédentes 1-11, **caractérisé en ce que** l'élément de lumière (80) est conçu de telle sorte que dans l'évidement (82) il puisse être inséré dans et fixé contre la patte d'extrémité (8) du cadre de bicyclette (1), dans lequel l'élément de lumière (80) est logé, à l'état inséré et par affleurement de surfaces, dans le cadre de bicyclette (1) contre la patte d'extrémité (8).

14. Procédé de fixation d'un porte-bagages (110) contre une bicyclette (100) comprenant les étapes suivantes consistant à :
• éloigner un élément de lumière (80) de la bicyclette (100) depuis un évidement (82) contre une patte d'extrémité (8) contre le cadre de bicyclette (1) de la bicyclette (100), dans lequel l'élément de lumière (80) est logé, à l'état inséré et par affleurement de surfaces, dans le cadre de bicyclette (1) contre la patte d'extrémité (8),
• insérer et fixer un talon de logement (112) dans l'évidement (82) contre le cadre de bicyclette (1), dans lequel le porte-bagages (110) est ou peut être fixé contre le talon de logement (112) ;
• insérer et fixer l'élément de lumière (80) éloigné dans un autre évidement (122) contre le porte-bagages (110).
